# EUROPEAN PATENT APPLICATION

(11) **EP 4 808 208 A1**
(43) Date of publication of application: **16.09.2026**
(21) Application number: 24896217.7
(22) Date of filing: 06.11.2024
(51) Int. Cl.: H04W 36/00

(54) **COMMUNICATION METHOD, APPARATUS AND SYSTEM**

(30) Priority: 30.11.2023 CN 202311642588
(71) Applicant: Huawei Technologies Co., Ltd., Shenzhen, Guangdong 518129 (CN)
(72) Inventor: WANG, Fanfan, Shenzhen, Guangdong 518129 (CN)
(74) Representative: Isarpatent
(86) International application number: PCT/CN2024/130192
(87) International publication number: WO 2025/113126

(57) **Abstract**

This application provides a communication method, apparatus, and system, which can be applied to a handover scenario, such as an LTM scenario. In the communication method, a terminal device records information related to a handover process in an LTM scenario, and reports this information to a network device, so that the network device can optimize related parameters, thereby reducing the interruption delay during handover and reducing the probability of handover failure.

## Description

This application claims priority to Chinese Patent Application No. 202311642588.6 filed with the State Intellectual Property Office of China on November 30, 2023, whose title is "Communication Method, Apparatus, and System." The entire content of the priority application is incorporated herein by reference.

### Technical Field

This application relates to the field of communications. In particular, it relates to a communication method, apparatus, and system.

### Background

In scenarios where mobility is successful, there may also be potential issues that could lead to mobility failure. These potential issues do not necessarily represent actual failures, but rather indicate that during the handover process, the handover is not an optimal one or has encountered a situation close to handover failure. In order to identify non-optimal handover events in scenarios where mobility is successful, the terminal device (user equipment, UE) may record and report parameters during the successful handover process to the network device. This is referred to as a successful handover report (successful HO report, SHR), which is used to record mobility-related information for a successful handover that has potential issues. The network device can then optimize the UE's mobility by combining the SHR with the UE's context. However, the current mechanism of the SHR cannot support mobility scenarios triggered by Layer 1/Layer 2 signaling (L1/L1 triggered mobility, LTM).

### Summary

This application provides a communication method, apparatus, and system, which can reduce a handover interruption delay in an LTM scenario and improve the probability of a successful handover.

According to a first aspect, a communication method is provided. The method may be performed by a terminal device, or may be performed by a chip or a circuit used for the terminal device, or may be performed by a logical module or software that can implement all or some functions of the terminal device. This application does not impose a limitation thereto.

The method includes: receiving, by a terminal device, first indication information sent via a media access control control element, where the first indication information indicates the terminal device to switch to a target cell, and the target cell is one of one or more candidate cells, and the configuration information of the one or more candidate cells is pre-received by the terminal device. The terminal device records a first report, where the first report is used to indicate information in a process of performing layer 1/layer 2 mobility by the terminal device; and the terminal device sends the first report.

In this method, the information indicating a handover is sent via a media access control control element. Moreover, the terminal device may pre-receive configuration information of a candidate cell. That is, the terminal device supports handover in an LTM scenario. During the handover process, the terminal device may record relevant information. For example, the relevant information may be some parameters in the handover process. The terminal device reports this information to the network device, so that the network device can adjust and optimize the LTM mobility parameters, thereby improving the success rate of subsequent handovers.

In some implementations, the terminal device receives first information, where the first information indicates that the terminal device, in a mobility process at layer 1 or layer 2 and when a trigger condition is met, records the first report. The first information includes the trigger condition.

That is, the network device configures a trigger condition for the terminal device. When the trigger condition is met, the terminal device can record relevant information. This avoids the terminal device from recording relevant information and reporting it to the network side every time a successful handover occurs without filtering. This reduces the overhead of the terminal device in recording the first report, thereby reducing the overhead of the terminal device in storage and air interface signaling.

In some implementations, the trigger condition is related to at least one of the following: the target cell, the running duration of the first timer, the running duration of the second timer, the running duration of the third timer, the running duration of the fourth timer, the running duration of the fifth timer, or fast recovery.

The running duration of the first timer is duration from when the terminal device receives the first indication information to when the terminal device completes random access or sends the first uplink data.

The running duration of the second timer is duration from when the terminal device detects that there is a physical layer out-of-synchronization problem with the source network device to when the terminal device receives the first indication information.

The running duration of the third timer is duration from when the terminal device triggers the measurement report to be sent, to when the terminal device receives the first indication information, during the running period of the second timer.

The running duration of the fourth timer is duration from when the terminal device receives the first indication information to when the terminal device transmits the first uplink data or receives the first downlink data.

The running duration of the fifth timer is as follows: from the moment the terminal receives or applies a radio resource control (RRC) reconfiguration message with a synchronization function, until the terminal device completes random access, or until the terminal device receives the transmission duration of the downlink physical control channel after the first uplink transmission in the case of RACH-less access.

It should be understood that the above conditions are merely examples of conditions for the terminal device to record relevant information. For example, predefining the manner in which the terminal device records relevant information at a certain time point or within a certain time period can also be used in this application.

In some implementations, the trigger condition is related to the target cell, and the trigger condition is: the terminal device has not obtained an available early timing value of the target cell. The early timing value is used by the terminal device to obtain uplink synchronization with the target cell, thereby avoiding random access.

In some implementations, the terminal device has not obtained the early timing value of the target cell includes: the terminal device has not performed early timing value acquisition with the target cell, or the terminal device has performed early timing value acquisition with the target cell but has not obtained an available early timing value.

In some implementations, the trigger condition is related to the running duration of the first timer, and the trigger condition is:
The running duration of the first timer is less than a first threshold, and is greater than or equal to a second threshold.

Wherein, the second threshold is a product of the first threshold and a first coefficient, wherein the first coefficient is a positive number less than 1; or the second threshold is a value less than the first threshold.

In some implementations, the trigger condition is related to the running duration of the second timer, and the trigger condition is: the running duration of the second timer is less than a third threshold, and is greater than or equal to a fourth threshold, wherein the fourth threshold is a product of the third threshold and a second coefficient, wherein the second coefficient is a positive number less than 1; or the fourth threshold is a value less than the third threshold.

In some implementations, the trigger condition is related to the running duration of the third timer, and the trigger condition is: the running duration of the third timer is less than a fifth threshold, and is greater than or equal to a sixth threshold, wherein the sixth threshold is a product of the fifth threshold and a third coefficient, wherein the third coefficient is a positive number less than 1; or the sixth threshold is a value less than the fifth threshold.

In some implementations, the trigger condition is related to running duration of the fourth timer, and the trigger condition is that the running duration of the fourth timer is greater than or equal to a seventh threshold.

In some implementations, the trigger condition is related to running duration of the fifth timer, and the trigger condition is that running duration of the fifth timer is less than an eighth threshold and is greater than or equal to a ninth threshold, where the ninth threshold is a product of the eighth threshold and a fourth coefficient, and the fourth coefficient is a positive number less than 1, or the ninth threshold is a value less than the eighth threshold.

In some implementations, the trigger condition is related to the fast recovery, and the trigger condition is: performing, by the terminal device, the fast recovery based on the one or more candidate cells, to access one of the candidate cells.

In some implementations, the first report includes one or more types of the following information: one or more of the triggering conditions of the first report that are met; and; Early advance timing information; cell information; target cell access information; fast process recovery information.

In this method, the first report includes the cause of the triggering report and the related parameters, all of which are reported. This enables the network side to perform root cause analysis and optimize related parameters based on the first report, thereby reducing the delay of the data transmission terminal and further improving the accuracy of the network device's optimized parameters.

In some implementations, the first report includes early timing advance information. The early timing advance information includes at least one of the following: whether the terminal device has performed early timing advance in the target cell, the number of times the terminal device has received a PDCCH instruction indicating the target cell, the beam identifier information for the attempt to perform early timing advance, the number of times the preamble is sent through the attempted beam, the physical random access channel PRACH resource information, or the information corresponding to the candidate cell in which the terminal device is instructed to perform early timing advance, or the information of the target cell, or at least one of them.

In this method, the network side optimizes the process and parameters related to early timing based on the first report, thereby increasing the probability of RACH-less access during handovers and reducing the interruption time of data transmission.

In some implementations, the first report includes fast recovery procedure information. The fast recovery procedure information includes information about one or more candidate cells used for fast recovery, and/or duration from when the terminal device fails to perform a handover to when the terminal device successfully accesses one of the one or more candidate cells.

In this method, the network side optimizes the mobility parameters used for LTM based on the first report, such as an LTM target cell, to improve the probability of a successful LTM handover, thereby reducing the data transmission interruption time.

In some implementations, the first report further includes time information, and the time information includes at least one of the following: running duration of the first timer, running duration of a second timer, running duration of a third timer, running duration of a fourth timer, running duration of a fifth timer, and duration from when the terminal device receives the configuration information of the one or more candidate cells or receives the first PDCCH instruction or receives the last PDCCH instruction to when the terminal device receives the first indication information. At least one of the following:
In this method, the network side optimizes the parameters used for the LTM process and related parameters based on the first report. For example, it performs an early timing process and an LTM handover indication at a reasonable time point or time segment, thereby improving the success probability of RACH-less LTM handovers and reducing the interruption time of data transmission.

In some implementations, the first report further includes cell information. The cell information includes information about at least one of the current serving cell of the terminal device, the target cell of the terminal device, or a neighboring cell. The neighboring cell is a cell, other than the current serving cell, that is measured by the terminal device. The one or more candidate cells are cells that the terminal device is allowed to access when a handover failure occurs.

In this method, the network side optimizes the mobility parameters used for the LTM process based on the first report. For example, it optimizes the LTM target cell, thereby improving the success probability of LTM handovers and reducing the interruption time of data transmission.

In some implementations, the first report further includes access information of the target cell. The access information of the target cell includes the access type used by the terminal device to access the target cell. The access type is either RACH-less access or random access, or the access type is RACH-less access, or whether the access type is RACH-less access.

In some implementations, when the access type is random access, the access information of the target cell further includes information about a two-step random access process and/or a four-step random access process.

In this method, the network side optimizes the LTM process and related parameters based on the first report. This improves the success probability of a RACH-less LTM handover, reduces the interruption time of an LTM handover based on random access, and thereby reduces the interruption time of data transmission.

According to a second aspect, a communication method is provided. The method may be performed by a network device, or may be performed by a chip or a circuit used for the network device, or may be performed by a logical module or software that can implement all or some functions of the network device. This is not limited in this application.

The method includes: a network device sends first indication information, where the first indication information indicates the terminal device to switch to a target cell, and the first indication information is sent via a media access control control element. The target cell is one of one or more candidate cells, and information about the one or more candidate cells is pre-received by the terminal device. The network device receives the first report, where the first report is used to indicate information in a process in which the terminal device performs mobility at layer 1/layer 2.

In some implementations, the network device sends first information, where the first information indicates that the terminal device records the first report in a process in which the terminal device performs mobility at layer 1/layer 2 and when a trigger condition is met. The first information includes the trigger condition.

In some implementations, the trigger condition is related to at least one of the following: the target cell, running duration of a first timer, running duration of a second timer, running duration of a third timer, running duration of a fourth timer, running duration of a fifth timer, or fast recovery.

The running duration of the first timer is the duration from when the terminal device receives the first indication information to when the terminal device completes random access or sends the first uplink data.

The running duration of the second timer is the duration from when the terminal device detects a physical layer out-of-synchronization issue with the source network device to when the terminal device receives the first indication information.

The running duration of the third timer is the duration from when the second timer is running to when the terminal device triggers sending of a measurement report to when the terminal device receives the first indication information.

The running duration of the fourth timer is the duration from when the terminal device receives the first indication information to when the terminal device transmits the first uplink data or receives the first downlink data.

The running duration of the fifth timer is the duration from when the terminal receives or applies an RRC reconfiguration message with a synchronization function to when the terminal device completes random access or when the terminal device receives a downlink physical control channel after the first uplink transmission in the case of RACH-less access.

In some implementations, the trigger condition is related to the target cell, and the trigger condition is:
The terminal device does not have an available early timing value for the target cell, where the early timing value is used by the terminal device to obtain uplink synchronization with the target cell, thereby avoiding random access.

In some implementations, the trigger condition is related to the running duration of the first timer, and the trigger condition is: the running duration of the first timer is less than a first threshold, and is greater than or equal to a second threshold, where the second threshold is a product of the first threshold and a first coefficient, and the first coefficient is a positive number less than 1; or the second threshold is a value less than the first threshold.

In some implementations, the trigger condition is related to the running duration of the second timer, and the trigger condition is: the running duration of the second timer is less than a third threshold, and is greater than or equal to a fourth threshold, where the fourth threshold is a product of the third threshold and a second coefficient, and the second coefficient is a positive number less than 1; or the fourth threshold is a value less than the third threshold.

In some implementations, the trigger condition is related to the running duration of the third timer, and the trigger condition is: the running duration of the third timer is less than a fifth threshold value, and is greater than or equal to a sixth threshold value, where the sixth threshold value is a product of the fifth threshold value and a third coefficient, and the third coefficient is a positive number less than 1, or the sixth threshold value is a value less than the fifth threshold value.

In some implementations, the trigger condition is related to the running duration of the fourth timer, and the trigger condition is: the running duration of the fourth timer is greater than or equal to a seventh threshold value.

In some implementations, the trigger condition is related to the running duration of the fifth timer, and the trigger condition is: the running duration of the fifth timer is less than an eighth threshold value, and is greater than or equal to a ninth threshold value, where the ninth threshold value is a product of the eighth threshold value and a fourth coefficient, and the fourth coefficient is a positive number less than 1, or the ninth threshold value is a value less than the eighth threshold value.

In some implementations, the trigger condition is related to the fast recovery, and the trigger condition is: The terminal device performs fast recovery based on the one or more candidate cells, to access one of the candidate cells.

In some implementations, the first report includes one or more of the following information:
One or more of the trigger conditions for the first report that are met; early timing advance information; cell information; target cell access information; fast process recovery information.

In some implementations, the first report includes early timing advance information, and the early timing advance information includes at least one of the following information: whether the terminal device performs early timing advance in the target cell, the number of times the terminal device receives a PDCCH instruction indicating the target cell, the beam identifier information for attempting early timing advance, the number of times a preamble is sent by using the attempted beam, physical random access channel PRACH resource information, and information corresponding to a candidate cell in which the terminal device is instructed to perform early timing advance, or the information of the target cell.

In some implementations, the first report includes fast recovery procedure information. The fast recovery procedure information includes information about one or more candidate cells used for fast recovery, and/or duration from when the terminal device fails to perform a handover to when the terminal device successfully accesses one of the one or more candidate cells.

In some implementations, the first report further includes time information. The time information includes at least one of the following: a running duration of the first timer, a running duration of the second timer, a running duration of the third timer, a running duration of the fourth timer, a running duration of the fifth timer, and duration from when the terminal device receives the preconfiguration of the candidate cell or receives the first PDCCH instruction or receives the last PDCCH instruction, to when the terminal device receives the first indication information.

In some implementations, the first report further includes cell information. The cell information includes information about at least one of the following: a current serving cell of the terminal device, a target cell of the terminal device, or a neighboring cell. The cell information includes cell identification information, a layer 1 and/or layer 3 measurement result corresponding to the cell, and whether the neighboring cell belongs to the one or more candidate cells, where the neighboring cell is a cell, other than the current serving cell, that is measured by the terminal device. The one or more candidate cells are cells that are allowed to be accessed by the terminal device when a handover failure occurs.

In some implementations, the first report further includes access information of the target cell. The access information of the target cell includes an access type used by the terminal device to access the target cell. The access type is RACH-less access or random access, or the access type is RACH-less access.

In some implementations, when the access type is random access, the access information of the target cell further includes information about a two-step random access process and/or a four-step random access process.

It should be understood that the second aspect is an implementation on the network device side corresponding to the first aspect. Descriptions of explanations, supplements, and beneficial effects of the first aspect are also applicable to the second aspect, and are not described again.

According to the third aspect, a communications apparatus is provided, including a transceiver unit and a processing unit. The transceiver unit is configured to receive first indication information sent via a media access control control element. The first indication information indicates the terminal device to switch to a target cell, where the target cell is one of one or more candidate cells, and configuration information of the one or more candidate cells is pre-received by the terminal device. The processing unit is configured to record a first report, where the first report is used to indicate information in a process in which the terminal device performs layer 1/layer 2 mobility; and the transceiver unit is further configured to send the first report.

In some implementations, the transceiver unit is further configured to receive first information, where the first information indicates that the terminal device records the first report when the terminal device is in a mobility process at layer 1 or layer 2 and a trigger condition is met. The first information includes the trigger condition.

In some implementations, the trigger condition is related to at least one of the running duration of the target cell, the running duration of the first timer, the running duration of the second timer, the running duration of the third timer, the running duration of the fourth timer, the running duration of the fifth timer, or fast recovery.

The running duration of the first timer is the duration from when the terminal device receives the first indication information to when the terminal device completes random access or sends the first uplink data.

The running duration of the second timer is the duration from when the terminal device detects a physical layer out-of-synchronization problem with the source network device to when the terminal device receives the first indication information.
running duration of the third timer is duration in which the terminal device triggers, in the running period of the second timer, a measurement report to be sent to the terminal device to receive the first indication information; and,
Running duration of the fourth timer is duration from the time when the terminal device receives the first indication information to the time when the terminal device transmits the first piece of uplink data or receives the first piece of downlink data.

Running duration of the fifth timer is duration from the time when the terminal receives or applies a radio resource control RRC reconfiguration message with a synchronization function to the time when the terminal device completes random access or receives physical downlink control channel transmission after the terminal device performs uplink transmission for the first time in a case of RACH-less access.

It should be understood that the foregoing condition is merely an example of a condition for the terminal device to record related information. For example, this application may also be used to predefine a manner in which the terminal device records related information at a time point or in a time period.

In some implementations, the trigger condition is related to the target cell, and the trigger condition is: the terminal device does not obtain an available timing advance value of the target cell, and the timing advance value is used by the terminal device to obtain uplink synchronization with the target cell to avoid random access.

In some implementations, that the terminal device does not obtain the timing advance value of the target cell includes: the terminal device does not perform early timing obtaining with the target cell, or the terminal device performs early timing obtaining with the target cell, and does not obtain an available timing advance value.

In some implementations, the trigger condition is related to running duration of the first timer, and the trigger condition is:
running duration of the first timer is less than a first threshold and is greater than or equal to a second threshold; or,
the second threshold is a product of the first threshold and a first coefficient, and the first coefficient is a positive number less than 1; or; the second threshold is a value less than the first threshold.

In some implementations, the trigger condition is related to running duration of the second timer, and the trigger condition is: running duration of the second timer is less than a third threshold and is greater than or equal to a fourth threshold, where the fourth threshold is a product of the third threshold and a second coefficient, and the second coefficient is a positive number less than 1, or the fourth threshold is a value less than the third threshold.

In some implementations, the trigger condition is related to the running duration of the third timer, and the trigger condition is: the running duration of the third timer is less than a fifth threshold value, and is greater than or equal to a sixth threshold value, where the sixth threshold value is a product of the fifth threshold value and a third coefficient, and the third coefficient is a positive number less than 1, or the sixth threshold value is a value less than the fifth threshold value.

In some implementations, the trigger condition is related to the running duration of the fourth timer, and the trigger condition is: the running duration of the fourth timer is greater than or equal to a seventh threshold value.

In some implementations, the trigger condition is related to the running duration of the fifth timer, and the trigger condition is: the running duration of the fifth timer is less than an eighth threshold value, and is greater than or equal to a ninth threshold value, where the ninth threshold value is a product of the eighth threshold value and a fourth coefficient, and the fourth coefficient is a positive number less than 1, or the ninth threshold value is a value less than the eighth threshold value.

In some implementations, the trigger condition is related to the fast recovery, and the trigger condition is: the terminal device performs fast recovery based on the one or more candidate cells, to access one of the candidate cells.

In some implementations, the first report includes one or more of the following information: one or more of the trigger conditions for the first report that are met; early timing advance information; cell information; target cell access information; fast process recovery information.

In some implementations, the first report includes early timing advance information, and the early timing advance information includes at least one of the following information: whether the terminal device performs early timing advance in the target cell, the quantity of times that the terminal device receives a PDCCH instruction indicating the target cell, the beam identifier information that is used for attempting to perform early timing advance, the quantity of times that a preamble is sent by using the attempted beam, the physical random access channel PRACH resource information, and the information corresponding to the candidate cell in which the terminal device performs early timing advance or the information about the target cell, where at least one of the information is included.

In some implementations, the first report includes fast recovery procedure information, and the fast recovery procedure information includes information about one or more candidate cells used for fast recovery, and/or duration from a handover failure of the terminal device to a successful access to one of the one or more candidate cells.

In some implementations, the first report further includes time information, and the time information includes running duration of the first timer, running duration of the second timer, running duration of the third timer, running duration of the fourth timer, running duration of the fifth timer, and running duration of the fourth timer at least one of duration from receiving the configuration information of the one or more candidate cells by the terminal device, receiving the first PDCCH instruction, or receiving the last PDCCH instruction, and receiving the first indication information by the terminal device.

In some implementations, the first report further includes cell information, and the cell information includes information about at least one of a current serving cell of the terminal device, a target cell of the terminal device, or a neighboring cell of the terminal device. the cell information comprises cell identity information, a layer 1 measurement result and/or a layer 3 measurement result corresponding to the cell, and whether the neighboring cell belongs to the one or more candidate cells, and the neighboring cell is another cell that is obtained by means of measurement by the terminal device and that is other than a current serving cell; and the one or more candidate cells are cells to which the terminal device is allowed to access when a handover fails.

In some implementations, the first report further includes access information of the target cell. The access information of the target cell includes the access type used by the terminal device to access the target cell. The access type is either RACH-less access or random access, or the access type is RACH-less access.

In some implementations, when the access type is random access, the access information of the target cell further includes information about a two-step random access process and/or a four-step random access process.

According to the fourth aspect, a communications apparatus is provided, including a transceiver unit. The transceiver unit is configured to send first indication information. The first indication information indicates the terminal device to switch to the target cell. The first indication information is sent via a media access control control element. The target cell is one of one or more candidate cells, and the information about the one or more candidate cells is information that the terminal device has received in advance. The transceiver unit is further configured to receive the first report, where the first report is used to indicate information in a process in which the terminal device performs layer 1/layer 2 mobility.

In some implementations, the transceiver unit is further configured to send first information, where the first information indicates that the terminal device records the first report in a mobility process at layer 1 or layer 2 and when a trigger condition is met. The first information includes the trigger condition.

In some implementations, the trigger condition is related to at least one of the following: the target cell, the running duration of the first timer, the running duration of the second timer, the running duration of the third timer, the running duration of the fourth timer, the running duration of the fifth timer, or fast recovery.

The running duration of the first timer is duration from when the terminal device receives the first indication information to when the terminal device completes random access or sends the first uplink data.

The running duration of the second timer is duration from when the terminal device detects that there is a physical layer out-of-synchronization problem between the terminal device and the source network device to when the terminal device receives the first indication information.

The running duration of the third timer is duration from when the second timer is running to when the terminal device triggers the measurement report to be sent to when the terminal device receives the first indication information, during the running period of the second timer.

Running duration of the fourth timer is duration from the time when the terminal device receives the first indication information to the time when the terminal device transmits the first piece of uplink data or receives the first piece of downlink data.

Running duration of the fifth timer is duration from the time when the terminal receives or applies a radio resource control RRC reconfiguration message with a synchronization function to the time when the terminal device completes random access or receives physical downlink control channel transmission after the terminal device performs uplink transmission for the first time in a case of RACH-less access.

In some implementations, the trigger condition is related to the target cell, and the trigger condition is:
the terminal device has no available timing advance value of the target cell, and the timing advance value is used by the terminal device to obtain uplink synchronization with the target cell to avoid random access.

In some implementations, the trigger condition is related to running duration of the first timer, and the trigger condition is: running duration of the first timer is less than a first threshold and is greater than or equal to a second threshold, where the second threshold is a product of the first threshold and a first coefficient, and the first coefficient is a positive number less than 1; and; the second threshold is a value less than the first threshold.

In some implementations, the trigger condition is related to the running duration of the second timer, and the trigger condition is: the running duration of the second timer is less than a third threshold value, and is greater than or equal to a fourth threshold value, where the fourth threshold value is a product of the third threshold value and a second coefficient, and the second coefficient is a positive number less than 1, or the fourth threshold value is a value less than the third threshold value.

In some implementations, the trigger condition is related to the running duration of the third timer, and the trigger condition is: the running duration of the third timer is less than a fifth threshold value, and is greater than or equal to a sixth threshold value, where the sixth threshold value is a product of the fifth threshold value and a third coefficient, and the third coefficient is a positive number less than 1, or the sixth threshold value is a value less than the fifth threshold value.

In some implementations, the trigger condition is related to the running duration of the fourth timer, and the trigger condition is: the running duration of the fourth timer is greater than or equal to a seventh threshold value.

In some implementations, the trigger condition is related to the running duration of the fifth timer, and the trigger condition is: the running duration of the fifth timer is less than an eighth threshold, and is greater than or equal to a ninth threshold. The ninth threshold is a product of the eighth threshold and a fourth coefficient, where the fourth coefficient is a positive number less than 1, or the ninth threshold is a value less than the eighth threshold.

In some implementations, the trigger condition is related to fast recovery, and the trigger condition is: the terminal device performs fast recovery based on the one or more candidate cells, to access one of the candidate cells.

In some implementations, the first report includes one or more of the following information: one or more of the trigger conditions for the first report that are met; early timing advance information; cell information; target cell access information; fast process recovery information.

In some implementations, the first report includes early timing advance information, and the early timing advance information includes at least one of the following information: whether the terminal device performs early timing advance in the target cell, a quantity of times that the terminal device receives a PDCCH instruction indicating the target cell, a beam identifier information that is attempted for performing early timing advance, a quantity of times that a preamble is sent by using the attempted beam, physical random access channel PRACH resource information, and information corresponding to a candidate cell in which the terminal device is instructed to perform early timing advance, or information about the target cell, where at least one of the information is included.

In some implementations, the first report includes fast recovery procedure information. The fast recovery procedure information includes information about one or more candidate cells used for fast recovery, and/or duration from when the terminal device fails to perform a handover to when the terminal device successfully accesses one of the one or more candidate cells.

In some implementations, the first report further includes time information. The time information includes at least one of the following: a running duration of the first timer, a running duration of the second timer, a running duration of the third timer, a running duration of the fourth timer, a running duration of the fifth timer, and duration from when the terminal device receives the preconfiguration of the candidate cell or receives the first PDCCH instruction or receives the last PDCCH instruction, to when the terminal device receives the first indication information.

In some implementations, the first report further includes cell information. The cell information includes information about at least one of the following: a current serving cell of the terminal device, a target cell of the terminal device, or a neighboring cell. The cell information includes cell identification information, a layer 1 and/or layer 3 measurement result corresponding to the cell, and whether the neighboring cell belongs to the one or more candidate cells, where the neighboring cell is a cell, other than the current serving cell, that is measured by the terminal device. The one or more candidate cells are cells that are allowed to be accessed by the terminal device when a handover failure occurs.

In some implementations, the first report further includes access information of the target cell, where the access information of the target cell includes an access type used by the terminal device to access the target cell. The access type is either RACH-less access or random access, or the access type is RACH-less access.

In some implementations, when the access type is random access, the access information of the target cell further includes information about a two-step random access process and/or a four-step random access process.

According to a fifth aspect, this application provides a communications apparatus, including an interface circuit and a processor. The interface circuit is configured to implement a function of the transceiver module in the third aspect. The processor is configured to implement a function of the processing module in the third aspect.

According to a sixth aspect, this application provides a communications apparatus, including an interface circuit and a processor. The interface circuit is configured to implement a function of the transceiver module in the fourth aspect. The processor is configured to implement a function of the processing module in the sixth aspect.

According to a seventh aspect, this application provides a computer-readable medium. The computer-readable medium stores program code used by a terminal device to perform. The program code includes instructions for performing the method according to the first aspect, or any possible implementation of the first aspect, or all possible implementations of the first aspect.

Aspect 8, embodiments of this application provide a computer-readable medium. The computer-readable medium stores program code for a network device to execute. The program code includes instructions for performing the method according to any possible manner in Aspect 2 or Aspect 3, or any possible manner in Aspect 2, or any possible manner in Aspect 3, or all possible manners in Aspect 2, or all possible manners in Aspect 3.

Aspect 9 provides a computer program product that stores computer-readable instructions. When the computer-readable instructions are run on a computer, the computer is caused to perform the method according to any possible manner in Aspect 1 or Aspect 2, or any possible manner in Aspect 1, or any possible manner in Aspect 2, or all possible manners in Aspect 1, or all possible manners in Aspect 2.

Aspect 10 provides a computer program product that stores computer-readable instructions. When the computer-readable instructions are run on a computer, the computer is caused to perform the method according to any possible manner in Aspect 2 or Aspect 3, or any possible manner in Aspect 2, or any possible manner in Aspect 3, or all possible manners in Aspect 2, or all possible manners in Aspect 3.

As the eleventh aspect, a communications system is provided. The communications system includes a device having a method for implementing the first aspect, or any possible implementation of the first aspect, or all possible implementations of the first aspect, according to the second aspect, or any possible implementation of the second aspect, or all possible implementations of the second aspect. The communications system may further include a functional apparatus with various possible designs for implementing the method.

As the twelfth aspect, a processor is provided, configured to be coupled to a memory, and configured to execute the method according to the first aspect, or any possible implementation of the first aspect, or all possible implementations of the first aspect, or according to the second aspect, or any possible implementation of the second aspect, or all possible implementations of the second aspect.

As the thirteenth aspect, a processor is provided, configured to be coupled to a memory, and configured to execute the method according to the second aspect, or any possible implementation of the second aspect, or all possible implementations of the second aspect.

As the fourteenth aspect, a chip system is provided. The chip system includes a processor, and may further include a memory, configured to execute a computer program or instructions stored in the memory, so that the chip system implements the method according to any one of the first aspect or the second aspect, or any possible implementation of any one of the first aspect or the second aspect, or all possible implementations of any one of the first aspect or the second aspect. The chip system may include a chip, or may include a chip and another discrete component.

### Description of Drawings

Figure 1 is a schematic diagram of a wireless communication system applicable to the embodiments of this application.
Figure 2 is a schematic diagram of a protocol stack applicable to the embodiments of this application.
Figure 3 is a schematic diagram of an ORAN system applicable to the embodiments of this application.
Figure 4 is a schematic flowchart of a four-step contention-based random access provided in the embodiments of this application.
FIG. 5 is a schematic flowchart of a two-step random access based on contention, according to an embodiment of this application.
FIG. 6 is a schematic diagram of a communication method according to an embodiment of this application.
FIG. 7 is a schematic diagram of another communication method according to an embodiment of this application.
FIG. 8 is a schematic flowchart of a communication method according to an embodiment of this application.
FIG. 9 is a schematic diagram of two handover procedures according to an embodiment of this application.
FIG. 10 shows a schematic block diagram of a communications apparatus according to an embodiment of this application.
FIG. 11 shows a schematic structural diagram of a communications apparatus according to an embodiment of this application.
FIG. 12 shows a schematic diagram of a chip system according to an embodiment of this application.

### Description of embodiments

The following describes the technical solutions in this application with reference to the accompanying drawings.

The technical solutions provided in this application can be applied to various communication systems, such as: a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, and the like. The technical solutions provided in this application can also be applied to future communication systems, such as a 6th generation mobile communication system. The technical solutions provided in this application can also be applied to device-to-device (device to device, D2D) communication, vehicle-to-everything (vehicle-to-everything, V2X) communication, machine-to-machine (machine to machine, M2M) communication, machine type communication (machine type communication, MTC), and an internet of things (internet of things, IoT) communication system or another communication system.

In the embodiments of this application, the terminal device includes various devices having a wireless communication function, and may be used to connect a person, an object, a machine, or the like. The terminal device may be widely used in various scenarios, for example: cellular communications, D2D, V2X, end-to-end (peer to peer, P2P), M2M, MTC, IoT, virtual reality (virtual reality, VR), augmented reality (augmented reality, AR), industrial control, autonomous driving, telemedicine, smart grid, smart furniture, smart office, smart wearable, smart transportation, smart city, drones, robots, remote sensing, passive sensing, positioning, navigation and tracking, autonomous delivery, and the like. The terminal device may be a terminal in any one of the foregoing scenarios, for example, an MTC terminal or an IoT terminal. The terminal device may be a user equipment (user equipment, UE), a terminal (terminal), a fixed device, or a mobile station (mobile station) device or a mobile device, a subscriber unit (subscriber unit), a handheld device, a vehicle-mounted device, a wearable device, a cellular phone (cellular phone), a smart phone (smart phone), a SIP phone, a wireless data card, a personal digital assistant (personal digital assistant, PDA), a computer, a tablet computer, a notebook computer, a wireless modem, a handset (handset), a laptop computer (laptop computer), a computer having a wireless transceiver function, a smart book, a vehicle, a satellite, a global positioning system (global positioning system, GPS) device, a target tracking device, an aircraft (for example, a drone, a helicopter, a multi helicopter, a quad helicopter, or an airplane), a ship, a remote control device, a smart home device, an industrial device, or an apparatus (for example, a communication module, a modem, or a chip in the foregoing device) that is built in the foregoing device, or another processing device connected to the wireless modem. For ease of description, in the following, the terminal device is described by using an example in which the terminal device is a terminal or UE.

It should be understood that, in some scenarios, the UE may be further configured to serve as a base station. For example, the UE may act as a scheduling entity that provides sidelink signals between UEs in scenarios such as V2X, D2D, or P2P.

In the embodiments of this application, the apparatus used to implement a function of the terminal device may be a terminal device, or may be an apparatus that can support the terminal device in implementing the function, for example, a chip system or a chip. The apparatus may be installed in the terminal device. In this embodiment of this application, the chip system may include a chip, or may include a chip and another discrete component.

The network device in the embodiments of this application may be a device configured to communicate with a terminal device. The network device may also be referred to as an access network device or a radio access network device. For example, the network device may be a base station. The network device in the embodiments of this application may be a radio access network (radio access network, RAN) node (or device) that enables the terminal device to access a wireless network. The base station may cover various names in the following broad sense, or replace with the following names, for example, a node B (NodeB), an evolved NodeB (evolved NodeB, eNB), and a next generation NodeB (next generation NodeB, gNB), a relay station, an access point, a transmission and receiving point (transmitting and receiving point, TRP), a transmission point (transmitting point, TP), a master station, a secondary station, a multi-standard wireless (motor slide retainer, MSR) node, a home base station, a network controller, an access node, a radio node, an access point (AP), a transmission node, a transceiver node, a baseband unit (BBU), a remote radio unit (RRU), an active antenna unit (active antenna unit, AAU), a radio frequency head (remote radio head, RRH), a central unit (central unit, CU), a distributed unit (distributed unit, DU), a positioning node, and the like. The base station may be a macro base station, a micro base station, a relay node, a donor node, or the like, or a combination thereof. The base station may also refer to a communications module, a modem, or a chip that is configured to be disposed in the foregoing device or apparatus. Alternatively, the base station may be a mobile switching center, a device that undertakes a base station function in D2D, V2X, or M2M communication, a network side device in a 6G network, a device that undertakes a base station function in a future communications system, or the like. The base station may support networks with the same or different access technologies. A specific technology used by the network device and a specific device form are not limited in this embodiment of this application.

The base station may be fixed or mobile. For example, a helicopter or UAV may be configured to act as a mobile base station, one or more cells may move according to the location of the mobile base station. In other examples, a helicopter or UAV may be configured as a device communicating with another base station.

In this embodiment of this application, the apparatus used to implement a function of the network device may be a terminal device, or may be an apparatus, for example, a chip system or a chip, that can support the network device in implementing the function. The apparatus may be installed in the network device. In this embodiment of this application, the chip system may include a chip, or may include a chip and another discrete component.

The network device and the terminal device may be deployed on land, including indoor or outdoor, handheld or vehicle-mounted. It can also be deployed on the water surface; It can also be deployed on aircraft, balloons and satellites in the air. Scenarios in which the network device and the terminal device are located are not limited in this embodiment of this application.

First, a network architecture applicable to the embodiments of this application is briefly described as follows.

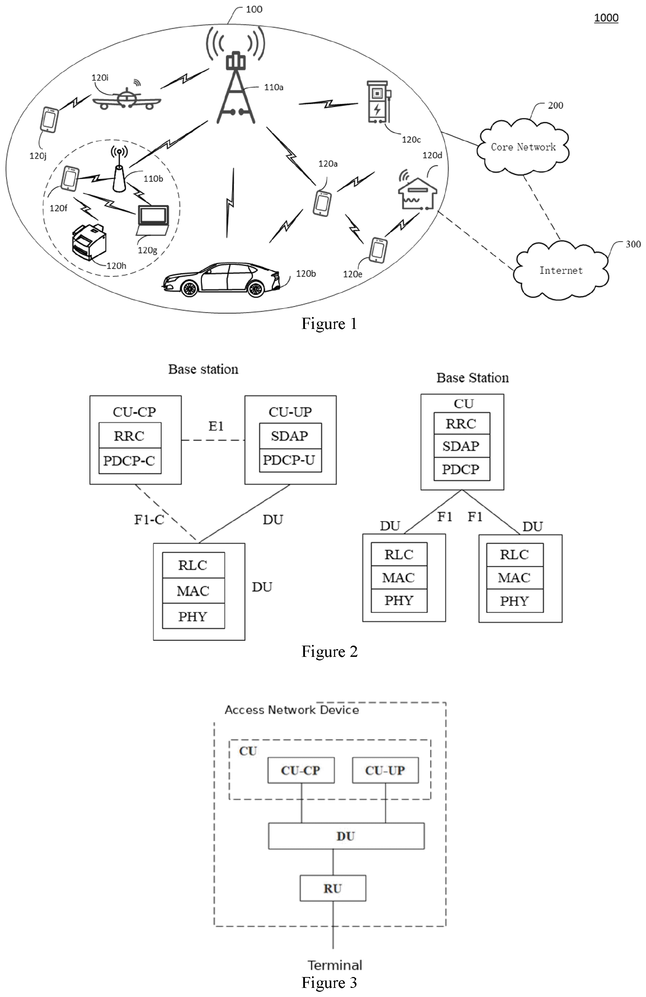

FIG. 1 is a schematic diagram of a wireless communications system 100 applicable to embodiments of this application. As shown in FIG. 1, the wireless communications system 100 may include at least one network device, for example, the network device 110a shown in FIG. 1. The wireless communications system 100 may further include at least one terminal device, for example, the terminal device 120a and the terminal device 120b shown in FIG. 1. Both the network device and the terminal device may be configured with a plurality of antennas, and the network device and the terminal device may use a multi-antenna technology to communicate. The terminal device and the terminal device may also communicate with each other. For example, the terminal device and the terminal device may directly communicate with each other. For another example, the terminal device and the terminal device may communicate with each other through another communication device, such as a network device or another terminal device.

Wherein, when the network device and the terminal device communicate, the network device may manage one or more cells, and an integer number of terminal devices may be present in one cell. Optionally, the network device 110a and the terminal device 120a form a single-cell communication system. Without loss of generality, the cell is referred to as cell #1. The network device 110a may be a network device in the cell #1, or the network device 110a may serve a terminal device (for example, the terminal device 120a)) in the cell #1.

It should be noted that the cell may be understood as an area within a radio signal coverage area of the network device.

It should be understood that, for ease of understanding, FIG. 1 is a simplified schematic diagram of an example. The wireless communications system 100 may further include another network device or may further include another terminal device, which is not shown in FIG. 1. This embodiment of this application may be applicable to any communication scenario in which a transmit end device communicates with a receive end device.
(1) The terminal 120 may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), and the Internet of Things (internet of things). IoT, virtual reality, augmented reality, industrial control, autonomous driving, telemedicine, smart grid, smart furniture, smart office, smart wearable, smart transportation, smart city, etc. The terminal may be a mobile phone, a tablet computer, a computer with a wireless sending and receiving function, a wearable device, a vehicle, an unmanned aerial vehicle, a helicopter, an aircraft, a ship, a robot, a robotic arm, a smart home device, or the like. A device form of the terminal is not limited in this embodiment of this application.
2) RAN node 110, sometimes also referred to as an access network device, RAN entity, or access node, constitutes a part of the communication system. It is used to assist terminals in achieving wireless access. In the communication system 1000, multiple RAN nodes 110 can be of the same type or of different types. In some scenarios, the roles of the RAN node 110 and the terminal 120 are relative. For example, in Figure 1, network element 120i can be a helicopter or an unmanned aerial vehicle (UAV), which can be configured as a mobile base station. For those terminals 120j that access the RAN 100 through the network element 120i, the network element 120i is a base station. However, for the base station 110a, the network element 120i is a terminal. The RAN node 110 and the terminal 120 are sometimes both referred to as communication devices. For example, in Figure 1, network elements 110a and 110b can be understood as communication devices with base station functions, and network elements 120a-120j can be understood as communication devices with terminal functions.

In a possible scenario, a RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation NodeB in a 6th generation (6th generation, 6G) mobile communications system, a base station in a future mobile communications system, or an access node in a WiFi system, etc. The RAN node may be a macro base station (as shown in 110a in FIG. 1)), a micro base station, an indoor base station (as shown in 110b in FIG. 1)), a relay node, a donor node, or a wireless controller in a CRAN scenario. Optionally, the RAN node may alternatively be a server, a wearable device, a vehicle, an in-vehicle device, or the like. For example, in vehicle external communication (vehicle to everything, V2X) technology, an access network device may be a road side unit (road side unit, RSU).

In another possible scenario, a plurality of RAN nodes cooperate to assist the terminal in implementing radio access, and different RAN nodes separately implement some functions of the base station. For example, the RAN node may be a centralized unit (central unit, CU), a distributed unit (distributed unit, DU), a CU-control plane (control plane, CP), a CU-user plane (user plane, UP), or a radio unit (radio unit, where RU) etc. The CU and the DU may be separately disposed, or may be included in a same network element, for example, a baseband unit (baseband unit, BBU). The CU node and the DU node split the protocol layer of the gNB, some protocol layer functions are controlled by the CU in a centralized manner, and some or all protocol layer functions are distributed in the DU, and the CU centrally controls the DU. In an implementation, as shown in FIG. 2, a radio resource control (radio Resource Control, RRC) layer, a PDCP layer, and a service data adaptation protocol (service data adaptation protocol, SDAP) layer that are in a protocol stack are deployed in the CU. A radio link control (radio link control, RLC) layer, a media access control (media access control, MAC) layer, and a physical layer (physical layer, PHY) in a protocol stack are deployed on the DU. Therefore, the CU has processing capabilities of RRC, PDCP, and SDAP. The DU has processing capabilities of the RLC, MAC, and PHY. It may be understood that the division of the foregoing functions is merely an example, and constitutes no limitation on the CU and the DU. The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, CU (or CU-CP and CU-UP), DU, or RU may also have different names. However, a person skilled in the art can understand their meanings. For example, in the ORAN system, CU can also be referred to as O-CU (Open CU), DU can also be referred to as O-DU, CU-CP can also be referred to as O-CU-CP, CU-UP can also be referred to as O-CU-UP, and RU can also be referred to as O-RU. For ease of description, this application uses CU, CU-CP, CU-UP, DU, and RU as examples for description. Any one of the CU (or CU-CP, CU-UP)), DU, and RU in this application may be implemented by using a software module, a hardware module, or a combination of a software module and a hardware module. For specific protocol layer functions, refer to Table 1:

**Table 1 ORAN's access network equipment (NE modules) and their corresponding protocol layer functions**

| NE name | Full name in Chinese and English | Description |
|---|---|---|
| O-CU | O-RAN Central Unit or O-RAN Control Unit (O-RAN Aggregation Unit or O-RAN Control Unit) | Used to implement the radio resource control (radio resource control, RRC) layer, packet data convergence protocol (packet data convergence protocol, PDCP) layer, service data adaptation protocol (service data adaptation protocol, SDAP) layer, and other control functions in the 3GPP standard. |
| O-CU-CP | O-RAN central unit control plane, or O-RAN control unit control plane (O-RAN aggregation unit control plane, or O-RAN control unit control plane) | Similar to the CU-CP in the NR system, it is used to implement the functions of the RRC layer and the control plane functions of the PDCP layer. |
| O-CU-UP | O-RAN central unit user plane, or O-RAN control unit user plane (O-RAN aggregation unit user plane, or O-RAN control unit user plane) | Similar to the CU-UP in the NR system, it is used to implement the functions of the SDAP layer and the user plane functions of the PDCP layer. |
| O-DU | ORAN distributed unit (ORAN distributed unit) | Based on the functional partitioning at a lower layer, it is used to implement the higher layer (close to the MAC layer) of the radio link control (radio link control, RLC) layer, media access control (media access control, MAC) layer, and physical layer (PHY) in the 3GPP standard. The higher layer functions of the physical layer include one or more of the following: forward error correction (forward error correction, FEC) encoding/decoding, scrambling/descrambling, or modulation/demodulation. |
| O-RU | ORAN radio unit (ORAN radio unit) | Based on the segmentation of low-level functions, it is used to implement the low-level (close to the radio frequency) functions of the PHY and the radio frequency functions in the 3GPP standard. Wherein, the low-level functions of the physical layer include one or more of the following: fast Fourier transform (fast Fourier transform, FFT) transformation/inverse fast Fourier transform (inverse fast Fourier transformation, iFFT) transformation, digital beamforming, or the extraction and filtering of the physical random access channel (physical random access channel, PRACH), etc. |
| | | Similar to the transmission reception point (transmission reception point, TRP) or remote radio head (remote radio head, RRH) in 3GPP, but it includes the low-level functions of the PHY, such as FFT/iFFT or the extraction of PRACH. |

For example, FIG. 3 is a schematic diagram of an ORAN system. The ORAN system may include one or more CUs, DUs, and RUs.

3) Core network equipment refers to the equipment in the core network (core network, CN) that provides service support for terminals. Currently, some examples of core network equipment include: an access and mobility management function (access and mobility management function, AMF) entity, a session management function (session management function, SMF) entity, a user plane function (user plane function, UPF) entity, and so on. These are not listed one by one here. Wherein, the AMF entity may be responsible for access management and mobility management of the terminal; the SMF entity may be responsible for session management, such as session establishment for the user; the UPF entity may be a user plane function entity, mainly responsible for connecting to an external network. It should be noted that, in this application, an entity may also be referred to as a network element or a functional entity. For example, the AMF entity may also be referred to as an AMF network element or an AMF functional entity. For another example, the SMF entity may also be referred to as an SMF network element or an SMF functional entity, and so on.

For ease of understanding the embodiments of this application, the following briefly describes terms in the embodiments of this application.

### 1. Traditional (basic) switchover

In a mobile communications system, in a conventional handover procedure, mobility management of UE in a connected state is controlled by a network device. For example, the source base station sends an RRC reconfiguration message that includes a handover command to indicate which target cell the UE is handed over to and how to perform handover. Specifically, after receiving the RRC reconfiguration message including the handover command, the UE immediately releases the source cell, stops uplink/downlink data transmission with the source cell, and accesses the target cell according to content included in the handover command. Therefore, the successful sending of the handover message is a necessary condition for the successful handover in the traditional handover mechanism.

### 2. Conditional Handover (CHO)

The CHO mechanism increases the handover success rate. For example, when source link quality is relatively good, the source base station sends an RRC reconfiguration message including CHO configuration information to the UE. The CHO configuration information may include configuration information of one or more candidate cells, an execution trigger condition of the candidate cells, a measurement configuration, or the like. After receiving the CHO configuration information, the UE does not immediately initiate a handover action to any candidate cell, but continues to maintain a connection and data transmission with the source base station. After finding a candidate cell that meets the triggering conditions among the candidate cells, the UE may independently determine a target cell and initiate handover execution. Different from CHO, in basic handover, after receiving a handover command, the UE immediately performs a handover to the target cell indicated by the handover command.

### 3. Dual Active Protocol Stack (DAPS) Handover

The DAPS handover mechanism can reduce the interruption time during handover. Specifically, the interruption time refers to the period during which the UE (User Equipment) cannot transmit or receive data with any base station during the handover process. For example, the source base station indicates the target cell to the UE through an RRC reconfiguration message that includes the handover command. The UE then accesses the target cell based on the content included in the handover command. During the handover execution period (or the period during which the UE accesses the target cell), the UE continues to transmit data with the source cell until the UE establishes a connection with the target cell and begins transmitting data. Specifically, the UE can simultaneously receive and transmit data with both the source cell and the target cell within a short period of time.

The UE continues to receive downlink data from the source cell until the target cell instructs the UE to release the source cell.

The UE continues to send uplink user data to the source cell until successfully performing random access to the target cell.

The DAPS handover places higher demands on UE capabilities. From the UE's perspective, during the DAPS handover process, there are two active protocol stacks internally. One active protocol stack is used for the transmission and reception of user plane data in the target cell; the other active protocol stack is used for the transmission and reception of user plane data in the source cell. The user plane protocol stack on the source side and the user plane protocol stack on the target side share a common PDCP entity, enabling the source side and the target side to have a shared reordering and deduplication function.

### 4. Random Access (random access, RA)

Random access is a step that a UE must go through to connect to the network. The terminal device and the network device establish a wireless link through the RA process to achieve uplink synchronization. After the RA is successfully completed, the UE and the base station perform normal data transmission. Through random access, the UE can achieve the following purposes: obtaining uplink synchronization, obtaining an uplink grant (UL grant), and obtaining a unique cell radio network temporary identifier (Cell Radio Network Temporary Identifier, C-RNTI).

Wherein, RA is divided into four-step contention-based random access (4-step contention based random access, 4-step CBRA), four-step contention-free random access (4-step contention free random access, 4-step CFRA), two-step contention-based random access (2-step contention based random access, 2-step CBRA), and two-step contention-free random access (2-step contention free random access, 2-step CFRA). The following specifically describes the processes of 4-step CBRA and 2-step CBRA.

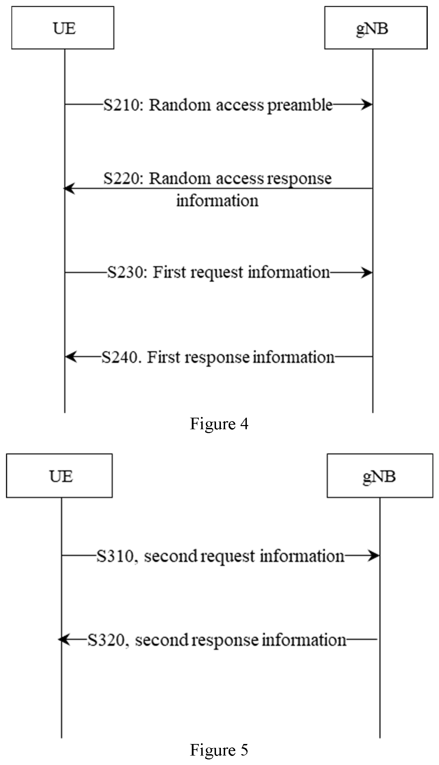

Figure 4 shows a schematic flowchart of 4-step CBRA according to an embodiment of this application. For ease of understanding, the terminal device is used as an example of UE, and the network device is used as an example of gNB. As shown in Figure 4:
S410. The UE sends a random access preamble (preamble) to the gNB.

Specifically, the UE sends a preamble (preamble) to the gNB on a physical random access channel (physical random access channel, PRACH) resource, for example, a random access channel occasion (RACH Occasion).

For example, the gNB notifies, by using a system message, the UE of a PRACH time-frequency resource set that can be used by the current cell to transmit the preamble. When initiating random access, the UE further needs to select a (CBRA) or a (CFRA) PRACH resource specified by the base station. Send preamble.

S420. The gNB sends random access response information to the UE.

Specifically, after the gNB receives the preamble from the UE, the gNB sends random access response (random access response, RAR) information to the UE. The RAR may indicate a resource location of a physical uplink shared channel (physical uplink shared channel, PUSCH).

The following may be referred to as message 2 (msg2), and may include a preamble identifier, timing advance (timing advance, TA) information, initial uplink grant (uplink grant, UL grant) information, and may further carry a temporary identifier of the UE.

S430: The UE sends first request information to the gNB.

Specifically, the UE sends, based on the resource location of a PUSCH indicated in the random access response information received from the gNB, the first request information to the gNB by using the PUSCH.

Optionally, the first request information includes an RRC setup request (RRC Setup Request) message or an RRC resume request (RRC Resume Request) message.

The first request message is hereinafter referred to as message 3 (msg3). That is, the UE sends msg3 based on the UL grant information indicated in the RAR. Msg3 may include L2 or L3 information, for example, a BFR MAC CE or an RRC message. Msg3 may include UE identification information, for example, C-RNTI information of the UE, a resume identifier (Resume ID) of the UE, or an inactive identifier (Inactive RNTI, I-RNTI)).

S440: The gNB sends first response information to the UE.

Specifically, after the gNB receives the first request information of the UE, the gNB sends the first response information to the UE.

Optionally, the first response information includes one or more of the following: an RRC setup (RRC Setup) message, an RRC resume (RRC Resume) message, an acknowledgment (acknowledgement, ACK) /negative acknowledgment (negative acknowledgement, NACK) of the physical uplink shared channel (physical uplink control channel, PUSCH)) in the first request information, and a power control command.

That is, because in step 430, the UE carries UE identification information, if the UE successfully resolves the contention, then the gNB sends a contention resolution message to the UE, which includes the UE identification information.

The above Figure 4 mainly describes the specific process of information exchange between a UE and a gNB based on a four-step contention-based random access (4-step CBRA) procedure.

Figure 5 shows a schematic flowchart of a 2-step CBRA procedure provided in an embodiment of this application. For ease of understanding, the terminal device is used as an example of UE, and the network device is used as an example of gNB. As shown in Figure 5:
S510: The UE sends second request information to the gNB.

Specifically, the UE sends the second request information to the gNB on a PRACH resource, and sends uplink data to the gNB via a PUSCH.

Optionally, the second request information includes a preamble, an RRC setup request (RRC Setup Request) message, or an RRC resume request (RRC Resume Request) message.

That is, the UE sends msgA, which includes a 2-step RACH preamble and data sent on the PUSCH corresponding to the preamble.

S520: The gNB sends second response information to the UE.

Specifically, after the gNB receives the second request information from the UE, the gNB sends the second response information to the UE.

Optionally, the second response information includes one or more of the following: an RRC setup (RRC Setup) message, an RRC resume (RRC Resume) message, an ACK/NACK response to the PUSCH in the second request information, and a power control command.

That is, the UE receives msgB. If the conflict resolution is successful, the UE ends the RACH procedure.

Specifically, msgB typically includes the RAR of one or more users. The RAR is divided into SuccessRAR and FallbackRAR. The MAC layer will indicate which type of RAR it is. Understandably, this indication can be referred to as a fallback indication. The SuccessRAR includes a Contention Resolution ID, indicating that the gNB has detected the preamble and correctly decoded the data. If the CR ID matches the content sent by the UE in msgA, the contention resolution is considered successful. The FallbackRAR has a format similar to msg2, indicating that the gNB has detected the preamble but has not correctly decoded the data.

The above Figure 5 mainly describes the specific process of information exchange between the UE and the gNB in a two-step contention-based random access (2-step CBRA) scenario.

### 5. L1/L2 Signaling-Triggered Mobility (L1/L1 Triggered Mobility, LTM)

The LTM technology can reduce the interruption time during handovers. Specifically, the network device pre-sends an RRC reconfiguration message containing configuration information of multiple candidate cells to the UE. The candidate cells may be cells in the same CU under the network device, or may be cells in a CU different from the network device. The UE stores the configuration information of the multiple candidate cells. The UE reports a layer 1 measurement report to the network device. The network device indicates, to the UE by using an L2 handover command (MAC CE), a handover (cell switch) to a target cell. The UE performs a handover (cell switch) to the target cell based on the stored configuration information of the target cell, and stores the configuration information of one or more candidate cells to support consecutive handovers. LTM supports early TA acquisition, RACH-less access, and LTM supervision timer (also referred to as a first timer in this embodiment of this application)).

### 6. Successful Handover Report (successful handover report, SHR)

In scenarios where mobility is successful, there may also exist potential issues that could lead to mobility failure. It is important to note that potential issues do not necessarily represent actual failure. Rather, during the UE handover process, the handover is not an optimal handover or, in other words, it encounters a situation where a handover failure is imminent. Therefore, an SHR record is made. To identify non-optimal (or sub-optimal) handover times in scenarios where mobility is successful, the UE records and reports parameters related to the successful handover process to the network device. This is referred to as SHR, which is used to record mobility-related information for successful handovers that have potential issues. The handover type can be a traditional handover, a CHO, or a DAPS. The source base station can optimize the UE's mobility by combining the SHR information and the UE context.

Network devices first configure the UE with the conditions for recording SHR reports (also known as SHR trigger conditions). The conditions for recording SHR reports are delivered to the UE through an RRCReconfiguration (RRC reconfiguration) message sent by the source base station to the UE. The UE records the SHR only if the trigger conditions are met. The SHR may be triggered to record due to the timing results of the three timers T304/T310/T312 reaching a specific threshold or due to the occurrence of a radio link failure (radio link failure, RLF) in the source cell during the DAPS handover period, which triggers the recording.

When the running time of the timer T310/T312 reaches a specific threshold A, the UE considers that the radio link fails. When the running time of the timer T304 reaches a specific threshold B, the UE considers that the handover fails. Therefore, the T304, T310, or T312 running time thresholds for triggering the UE to record SHRs are less than or equal to the specific threshold C, that is, the failure threshold. If the T304, T310, or T312 running time thresholds are greater than or equal to the specific threshold D, the UE considers that a potential problem exists. Here, a value of the specific threshold A is greater than a value of the specific threshold B, and a value of the specific threshold C is greater than a value of the specific threshold D.

The definitions of the T304, T310, and T312 timers are as follows:
Timer T304: Running duration of the timer T304 indicates duration from receiving the RRC reconfiguration message by the terminal device to successfully completing random access to the target network device. The terminal device starts the timer T304 when receiving the RRC reconfiguration message, and stops when the random access is completed.

A timer T310 is also referred to as a second timer in this embodiment of this application. Running duration of the timer T310 indicates duration in which the terminal device detects a physical layer problem (physical layer problems) between the terminal device and the source network device. This problem usually occurs when the number of consecutive received downlink out-of-synchronization indications exceeds a certain threshold. After the timer T310 is started, the timer T310 is stopped if the radio link is restored while the timer T310 is running.

T312 Timer: In the embodiments of this application, it is also referred to as a third timer. The T312 timer is started during the running period of the T310 timer. The running duration of the T312 timer indicates the duration from when the terminal device triggers a measurement report (usually) until the terminal device resumes synchronization with the source network device.

Specifically, the start time, stop time, and processing after expiration of the three timers mentioned above are shown in Table 2 as an example.

**Table 2 Timer Functions**

| Timer | Start Time | Stop | Overdue |
|---|---|---|---|
| T304 | Receive or apply an RRC reconfiguration message with synchronization functionality; | Complete random access in the SpCell. If it is the T304 for the SCG, when the SCG is released. | If it is T304 for the master cell group (MCG): initiate an RRC reestablishment; |
| | | | initiate the sending of MCG failure information. |
| | | | If it is a DAPS handover and the source cell has not experienced an RLF, the process of sending failure information is initiated. |
| | | | If it is T310 for the secondary cell group (SCG): initiate the sending of SCG failure messages. |
| T310 | Detect physical layer issues in the special cell (SpCell) (if the number of consecutive downlink out-of-synchronization indications received exceeds a certain threshold). | The downlink synchronization indication continuously received at the physical layer of a special cell equals a certain threshold; receives or applies an RRC message with synchronization functionality; | If it is the T310 of the MCG: initiate an RRC reestablishment; |
| | | | initiate the sending of MCG failure information; |
| | | | If it is the T310 of the SCG: initiate the sending of an SCG failure message. |
| | The SpCell refers to the PCell of the MCG or the PSCell of the SCG in dual connectivity. Otherwise, it refers to the PCell. | | |
| | | receives a handover command; receives a reconfiguration of timer parameters; initiates an RRC reestablishment; initiates the sending of MCG failure information; if it is the T310 of the SCG, when the SCG is released. | |
| T312 | During the running of the timer T310, the UE sends a measurement report. | consecutively received downlink synchronization indications from the physical layer of the special cell equal to a certain | If the MCG T310 is used, the RRC connection reestablishment is initiated. sending MCG failure information; and; |
| | | threshold; receiving or applying an RRC reconfiguration message with a synchronization function; and; A handover command is received. | If the SCG T310 is used, the SCG sends a failure message. |
| | | receiving a reconfiguration of a timer parameter; Initiate RRC connection reestablishment. | |
| | | sending MCG failure information; and; If the SCG T310 is used, the SCG releases the T310. | |

In general, the SHR triggered by the T304 timer usually indicates the potential failure caused by the UE's access to the target cell, for example, premature handover. SHRs triggered by T310/T312 timers or RLFs in the source cell during DAPS handovers usually indicate potential failures between the UE and the source cell, for example, delayed handovers.

The SHR report includes at least one of the following information:
1) sourceCellInfo: Records the identifier and measurement results of the source PCell. The measurement results include the synchronization signal and PBCH block (SSB) available based on the handover completion time, and the channel state information reference signal (CSI-RS) measurement. It also records the cell-level reference signal receiving power (RSRP), reference signal receiving quality (RSRQ), and signal to interference plus noise ratio (SINR) of the source PCell, as well as the beam-level RSRP and RSRQ.
2) targetCellInfo: Records the ID and measurement results of the target PCell. The measurement results include SSB and CSI-RS measurements available at the handover completion time. It also records the cell-level RSRP, RSRQ, and SINR, as well as the beam-level RSRP and RSRQ.
3) shr-Cause: Records the SHR triggering conditions. For example, one or more of the following four triggering condition cause values-T310, T312, T304, and DAPS failure (DAPSFailure)-are set to True to indicate the triggering condition.
4) measResultNeighCells: Records the ID and measurement results of neighboring cells, excluding the source cell and the target PCell. The measurement results include SSB and CSI-RS measurements available at the handover completion time. It also records the cell-level RSRP, RSRQ, and SINR, as well as the beam-level RSRP and RSRQ, of the neighboring cells.

Wherein, the measurement result in the SHR report is the L3 measurement result. The cell identification information may include one or more of the following: the cell's global identifier (cell global identifier, CGI), physical cell identifier (physical cell identifier, PCI), frequency, physical cell identifier (physical cell identifier, PCI)), cell identifier (cell identifier, cell ID)), non-public network identifier (non-public network identifier, NPN ID)), non-terrestrial network identifier (non-terrestrial network identifier, NTN ID)), or one or more of the other cell identifiers. The CGI may include the public land mobile network (public land mobile network, PLMN ID) and cell ID, and may also include the tracking area code.

In SHR, the specific thresholds of T310, T312, and T304 serve as the triggering conditions for SHR. The T310/T312 thresholds for SHR are configured by the source PCell and reflect the physical layer out-of-synchronization issue between the UE and the source PCell. This is used to optimize the configuration of RLM (radio link monitoring) /BFD (beam failure detection). The T304 threshold for SHR is configured by the target PCell and reflects the random access issue between the UE and the target PCell. It may also reflect the mobility parameter issue of the source PCell, such as the mobility parameter issue of the target cell.

Unlike the immediate reporting mechanism of MCG failure information (where, after an MCG RLF occurs, the UE immediately sends the MCG failure information to the SN)), the reporting mechanism for SHR reports is delayed reporting. The UE records the SHR report. When the UE accesses a network device, the network device requests the UE to report the SHR report through a UEInformationRequest message. The UE then sends the report to the network device through a UEInformationResponse message. This is used by the network device to identify mobility process issues and optimize mobility parameters.

Currently, the SHR report covers traditional handovers, CHO, and DAPS mobility scenarios. It records potential issues in successful handovers under these scenarios to identify non-optimal handover events. However, it does not support the LTM scenario. In other words, in the LTM scenario, non-optimal handover events cannot be identified.

In view of this, the embodiments of this application propose a communication method. This method can enable a network device to identify non-optimal handover events in the LTM scenario, so as to adjust the mobility parameter. The following uses a terminal device and a network device as interaction entities to describe the communication method.

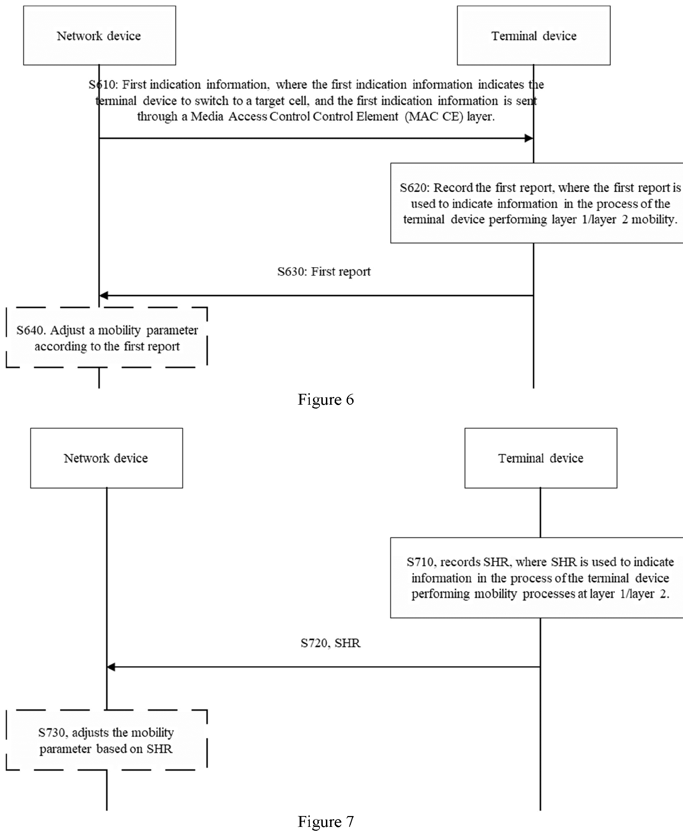

As shown in FIG. 6, the method includes the following steps:
S610. The network device sends first indication information to the terminal device. Correspondingly, the terminal device receives the first indication information.

The first indication information indicates the terminal device to switch to the target cell. For example, the first indication information indicates an index (index) of the target cell. Alternatively, the first indication information indicates a predefined number of the target cell. For example, a predefined cell A corresponds to a number 1, a predefined cell B corresponds to a number 2, and a predefined cell C corresponds to a number 3. In this case, the first indication information indicates the number 1, that is, indicates the cell A.

It should be understood that the index of the cell and the predefined number of the cell are merely examples for identifying the cell and are not intended to be limiting. Other methods that can identify or distinguish different cells should also fall within the protection scope of this application.

The first indication information may be sent via a media access control control element.

The target cell is one of one or more candidate cells, and the configuration information of the one or more candidate cells may be pre-received by the terminal device. For example, the network device sends the configuration information of the one or more candidate cells to the terminal device, and the terminal device receives the configuration information. Optionally, the terminal device may further store the configuration information.

Optionally, the network device sends the first information to the terminal device. Correspondingly, the terminal device receives the first information.

Wherein, the first information indicates the condition for triggering a successful handover report SHR. The condition for triggering the SHR is related to at least one of the target cell, the running duration of the first timer, the running duration of the second timer, the running duration of the third timer, the running duration of the fourth timer, the running duration of the fifth timer, or fast recovery.

The following provides a detailed explanation of each item.

### 1. Target Cell

The target cell is the handover target cell for the terminal device. For example, the terminal device performs a handover from cell A to cell B. In this case, cell A is the source cell of the terminal device, and cell B is the target cell of the terminal device.

The condition for triggering SHR is related to the target cell and includes the following: The condition for triggering SHR is that the terminal device does not have a TA value for the early timing of the target cell. For example, the terminal device has not performed early TA with the target cell, and therefore does not have a TA value for the early timing of the target cell. Alternatively, the terminal device has performed early TA with the target cell, but has not obtained the TA value.

In other words, when the terminal device does not have a TA value for the early timing of the target cell, the terminal device may record SHR.

### 2. First Timer

The first timer starts when the terminal device receives an LTM command (i.e., an example of the first indication information)). The first timer stops when the terminal device completes random access or sends the first uplink data. That is, the running duration of the first timer is the duration from when the terminal device receives the first indication information to when the terminal device completes random access or sends the first uplink data.

The LTM command is used to instruct the terminal device to perform a handover. For example, the LTM command includes an identifier or configuration identifier of the target cell. After receiving the LTM command, the terminal device performs a handover from the source cell to the target cell. The handover method may be accessing the target cell in a RACH-less manner, or accessing the target cell based on random access.

When a cell handover fails, if the access is in a RACH-less manner, the terminal device considers that, during the running of the first timer, the network device does not receive the initial uplink data. If the access is in a RACH-based manner, the terminal device considers that the random access fails (for example, the maximum number of preamble transmissions is reached, or the first timer times out). Otherwise, the terminal device considers that the cell handover is successful.

When the first timer expires, the terminal device may initiate a reestablishment procedure, or may initiate an LTM fast recovery procedure.

The condition for triggering the SHR is related to the first timer, and the condition for triggering the SHR includes: running duration of the first timer is less than a first threshold and is greater than or equal to a second threshold, where the second threshold is a product of the first threshold and a first coefficient; and the first coefficient is a positive number less than 1; Alternatively, the second threshold is a value less than the first threshold.

The second threshold or the first coefficient may be configured. In a possible manner, the second threshold or the first coefficient is carried in the first information. In other words, the network device indicates the first threshold or the first coefficient to the terminal device by using the first information. The threshold or coefficient may also be predefined. The first threshold of the first timer is configured duration of the first timer, and when the running duration of the timer reaches the configured duration, the timer expires.

Optionally, the condition for triggering the SHR may be that a ratio of the running duration of the first timer to the configured duration of the first timer is greater than or equal to the threshold A, or may be that the running duration of the first timer is greater than or equal to the threshold B

For example, the second threshold value of the first timer is configured as 3 or the first coefficient is configured as 60%, and the first threshold value of the first timer is configured as 5. When the running duration of the first timer is 4, the running duration of the first timer meets the SHR triggering condition.

The configuration duration of the first timer may also be indicated by using the first information.

The first timer may also be referred to as an LTM supervisory timer. It should be understood that the name of the timer should not cause any limitation, and there may be another name in future technology development. Any timer that has the same or similar functions and effects as the timer in this application shall fall within the protection scope of this application.

### 3. Second timer, third timer, and fifth timer

The second timer is started when the terminal device detects a physical layer problem (for example, a physical layer out-of-synchronization problem) of the source cell, and is stopped when the terminal device receives the LTM command. In other words, the running duration of the second timer indicates duration in which the terminal device detects that there is a physical layer problem between the terminal device and the source network device. Alternatively, the running duration of the second timer is duration from a time at which the terminal device detects that there is a physical layer problem between the terminal device and the source network device, to a time at which the terminal device receives the first indication information.

When the second timer is running and triggers the reporting of measurement reports for layer 1 and/or layer 3, the third timer starts. The third timer stops when the terminal device receives the LTM command. That is, the running duration of the third timer is the duration from when the terminal device receives or applies the RRC reconfiguration message with a synchronization function, to when the terminal device completes random access or when the terminal device receives the downlink physical control channel transmission after the first uplink transmission in the case of RACH-less access.

The fifth timer starts when the terminal device receives or applies the RRC reconfiguration message with a synchronization function. The fifth timer stops when the terminal device completes random access or when the terminal device receives the downlink physical control channel transmission after the first uplink transmission in the case of RACH-less access. That is, the duration of the fifth timer is the duration from when the terminal device receives or applies the RRC reconfiguration message with a synchronization function, to when the terminal device completes random access or when the terminal device receives the downlink physical control channel transmission after the first uplink transmission in the case of RACH-less access.

The second timer may refer to the description of the T310 timer in the preceding content. The third timer may refer to the description of the T312 timer in the preceding content. The fifth timer may refer to the description of the T304 timer in the preceding content. This is not described herein again. It should be noted that the second timer may be an enhanced version based on the T310 timer, or may be a newly designed timer that is different from the T310 timer. When the second timer is a newly designed timer that is different from the T310 timer, and the second timer is configured, the terminal device may release, delete, or deactivate (the T310/T312 timer configuration is saved, but the timer is not run) the T310 timer that is configured. The third timer is similar to the T320 timer. The fifth timer is similar to the T304 timer.

The condition for triggering the SHR is related to the second timer, the third timer, or the fifth timer, and includes:
The condition for triggering the SHR is as follows: The running duration of the second timer is less than the third threshold, and is greater than or equal to the fourth threshold. The fourth threshold is a product of the third threshold and the second coefficient, where the second coefficient is a positive number less than 1, or the fourth threshold is a value less than the third threshold.

For example, the third threshold value is 4, the fourth threshold value is 2, the running duration of the second timer is 3, which is greater than the fourth threshold value and less than the third threshold value. Then, the SHR is triggered, that is, the terminal device records the SHR.

The fourth threshold value or the second coefficient may be configured. In one possible manner, the fourth threshold value or the second coefficient is carried in the first information. In other words, the network device indicates, to the terminal device by using the first information, the fourth threshold value or the second coefficient. The foregoing threshold value or coefficient may also be predefined. The third threshold value of the second timer is the configuration duration of the second timer. When the running duration of the timer reaches the configuration duration, that is, the timer expires.

Optionally, the condition for triggering the SHR may be that a ratio of the running duration of the second timer to the configuration duration of the second timer is greater than or equal to the threshold value A, or may be that the running duration of the second timer is greater than or equal to the threshold value B.

For example, the fourth threshold value of the second timer is configured as 3 or the second coefficient is configured as 60%. The first threshold value of the second timer is configured as 5. When the running duration of the second timer is 4, the running duration of the first timer meets the SHR triggering condition.

Alternatively, the condition for triggering the SHR may be as follows: the running duration of the third timer is less than the fifth threshold, and is greater than or equal to the sixth threshold. Herein, the sixth threshold is the product of the fifth threshold and the third coefficient, where the third coefficient is a positive number less than 1. Alternatively, the sixth threshold is a value less than the fifth threshold.

The sixth threshold or the third coefficient may be configured. In one possible manner, the sixth threshold or the third coefficient is carried in the first information. In other words, the network device indicates, to the terminal device by using the first information, the sixth threshold or the third coefficient. The above thresholds or coefficients may also be predefined. Herein, the fifth threshold of the third timer is the configuration duration of the first timer. When the running duration of the timer reaches the configuration duration, that is, the timer expires.

Optionally, the condition for triggering the SHR may be as follows: the ratio of the running duration of the third timer to the configuration duration of the third timer is greater than or equal to the threshold A. Alternatively, the running duration of the second timer is greater than or equal to the threshold B.

For example, the fifth threshold value of the third timer is set to 3 or the third coefficient is set to 60%. The fifth threshold value of the third timer is set to 5. When the running duration of the second timer is 4, the running duration of the first timer meets the SHR triggering condition.

Alternatively, the condition for triggering the SHR is as follows: the running duration of the fifth timer is less than the eighth threshold value, and is greater than or equal to the ninth threshold value. The ninth threshold value is a product of the eighth threshold value and the fourth coefficient. The fourth coefficient is a positive number less than 1. Alternatively, the ninth threshold value is a value less than the eighth threshold value. A ninth threshold value or the fourth coefficient may be configured. In a possible manner, the ninth threshold value or the fourth coefficient is carried in the first information. The eighth threshold value of the third timer is the configured duration of the fifth timer. When the running duration of the timer reaches the configured duration, that is, the timer expires.

It should be understood that any other method that can determine whether the running duration of the timer has expired shall fall within the protection scope of this application. For example, other operations or processing that can compare a size relationship, such as other multiplication, subtraction, addition, or logarithm operations.

The source cell is the cell in which the terminal device is located before the handover.

### 4. Fourth Timer

The fourth timer is also referred to as the user plane interruption time. The user plane interruption time refers to the duration from when the terminal device receives the LTM command to when the terminal device transmits the first uplink data or receives the first downlink data. That is, the running duration of the fourth timer is the duration from when the terminal device receives the first indication information to when the terminal device transmits the first uplink data or receives the first downlink data.

The condition for triggering SHR is related to the fourth timer and includes: The condition for triggering SHR is that the running duration of the fourth timer is greater than or equal to the seventh threshold value.

The seventh threshold value may be predefined or may be configured. In one possible manner, the seventh threshold value is carried in the first information.

### 5. LTM Fast Recovery

LTM fast recovery is used when a terminal device switches to a candidate cell. This candidate cell can be one or more cells. The candidate cell differs from the target cell. For example, the identifier of the candidate cell is different from the identifier of the target cell.

One possible implementation is that the terminal device performs cell selection, and the selected cell is an LTM candidate cell. That is, the cell selected by the terminal device is the candidate cell configured by the network device for the terminal device. For details, refer to the foregoing description. The terminal device applies the saved configuration information of the candidate cell, and accesses the candidate cell in a random access or RACH-less access manner (the same as the foregoing cell handover process, cell switch). Conversely, if the cell selected by the terminal device is not an LTM candidate cell, the terminal device initiates an RRC reestablishment procedure to access the selected cell. The terminal device successfully executes the LTM fast recovery procedure, that is, the terminal device successfully accesses the LTM candidate cell through the LTM fast recovery procedure. This can also be considered as a scenario in which LTM cell handover (cell switch) is successfully performed.

The condition for triggering SHR is related to the fast recovery of LTM, including: The condition for triggering SHR is that the terminal device performs fast recovery of LTM or successfully performs fast recovery of LTM.

That is, when the terminal device performs fast recovery of LTM, or successfully performs fast recovery of LTM, SHR may be recorded.

S620. The terminal device records the first report.

For example, when the terminal device determines that the triggering condition is met, the terminal device records the first report. For a specific determining method, refer to the description in S610. Details are not described again.

S630. The terminal device sends the first report to the network device. Correspondingly, the network device receives the first report.

Optionally, the method may further include:
S640: The network device adjusts the mobility parameter based on the first report.

For example, the network side performs analysis based on the first report, and correspondingly optimizes the LTM process and related parameters. For instance, the network side may indicate a more reasonable target cell to the terminal device, to prevent the terminal device from performing a handover to an unreasonable cell. Alternatively, the network side may indicate the terminal device to perform a cell handover (cell switch) at a more appropriate time, to prevent the terminal device from performing the handover too early or too late, reduce the probability of handover failure or radio link failure, and reduce the impact of data transmission interruption time on user experience.

In this method, by setting a trigger condition for the first report (for example, SHR), the network side controls the recording and collection of the first report in the LTM scenario. The terminal device may feed back the first report recorded by the terminal device to the network device. The network device may optimize the mobility parameter based on the first report, thereby reducing a data transmission interruption delay during a handover, and reducing the probability of handover failure.

The embodiments of this application further propose a communication method. The following uses an example in which an SHR is used as the first report. As shown in FIG. 7, the method may include the following steps:
S710: The terminal device records the SHR.

The SHR is used to indicate information in a process in which the terminal device performs mobility at a layer 1/layer 2.

For example, the SHR includes one or more of the trigger conditions for triggering the SHR that are met (or a reason for triggering the SHR to be recorded, or a reason for triggering the SHR to be reported). The reason for reporting the SHR is related to at least one of the following: an early TA of the target cell, a first timer, a second timer, a third timer, a fourth timer, or LTM fast recovery.

The reason for reporting the SHR by the terminal device may indicate that the target cell has no available TA value, or may indicate that the target cell has no available TA value. Both of these two cases are applicable.

The SHR may include early TA information. The early timing advance information includes at least one of the following: whether the terminal device performs early timing advance in the target cell, the number of times the terminal device receives a PDCCH instruction indicating the target cell, identification information of a beam for which an attempt is made to perform early timing advance, the number of times a preamble is sent through the attempted beam, physical random access channel PRACH resource information, and information corresponding to a candidate cell in which the terminal device performs early timing advance, or the information of the target cell.

The reporting reason of the SHR is related to the first timer and includes the following: The SHR reason includes that the running duration of the first timer is less than a first threshold, and is greater than or equal to a second threshold. The second threshold is a product of the first threshold and a first coefficient, and the first coefficient is a positive number less than 1. Alternatively, the second threshold is a value less than the first threshold. The first threshold and/or the second threshold may be configured.

The reporting reason of the SHR is related to the second timer and includes the following: The SHR reason includes that the running duration of the second timer is less than a third threshold, and is greater than or equal to a fourth threshold.

Wherein, the fourth threshold value is the product of the third threshold value and the second coefficient, where the second coefficient is a positive number less than 1. Alternatively, the fourth threshold value is a value less than the third threshold value.

The reporting reason of the SHR is related to the third timer and includes: the running duration of the third timer is less than the fifth threshold value, and is greater than or equal to the sixth threshold value.

Wherein, the sixth threshold value is the product of the fifth threshold value and the third coefficient, where the third coefficient is a positive number less than 1. Alternatively, the sixth threshold value is a value less than the fifth threshold value.

The reporting reason of the SHR is related to the third timer and includes: the running duration of the fourth timer is greater than or equal to the seventh threshold value.

The reporting reason of the SHR is related to the fifth timer and includes: the running duration of the fifth timer is less than the eighth threshold value, and is greater than or equal to the ninth threshold value, where the ninth threshold value is the product of the eighth threshold value and the fourth coefficient, and the fourth coefficient is a positive number less than 1, or the ninth threshold value is a value less than the eighth threshold value.

The reporting reasons for the SHR include: The terminal device performs LTM fast recovery.

Wherein, the target cell has no available early TA, first timer, second timer, third timer, fourth timer, fifth timer, user plane interruption, or LTM fast recovery. For details, refer to the description in S610, and no further details are provided.

Optionally, the SHR may further include fast recovery procedure information. The fast recovery procedure information includes information about one or more candidate cells used for fast recovery, and/or duration from when a handover of the terminal device fails to when the terminal device successfully accesses one of the one or more candidate cells. The information about the cell may include at least one of the following: cell identification information, a measurement result of layer 1 and/or layer 3 corresponding to the cell, or indication information indicating that the cell is an LTM candidate cell. The SHR may further include time information. The time information includes at least one of the following: a user plane interruption time, duration from when a handover of the terminal device fails to when the terminal device receives a preconfiguration of a candidate cell or receives a first PDCCH instruction or receives a last PDCCH instruction, or duration of running of the first timer.

SHR may further include cell information. This cell information includes information about at least one of the following: the current serving cell (i.e., the source cell)) of the terminal device, the target cell of the terminal device, or a neighboring cell. The cell information may include at least one of the following: cell identification information, a measurement result of layer 1 and/or layer 3 corresponding to the cell, or indication information indicating whether a neighboring cell is a candidate cell for LTM. The candidate cell for LTM is a cell that is allowed to be accessed by the terminal device when a handover failure occurs.

SHR may further include the access type of the terminal device. The access type includes RACH-less access or random access, or the access type is RACH-less access, or whether the access type is RACH-less access.

SHR may further include information about a cell handover process based on random access. The information about the cell handover process based on random access indicates information about a two-step random access procedure and/or a four-step random access procedure. For a specific information type, name, or function, refer to the foregoing descriptions about the two-step random access procedure and/or the four-step random access procedure.

It should be understood that, in this application, there may be three ways of indicating "whether." One way is to indicate "true," another way is to indicate "false," and yet another way is to indicate "true or false." For example, whether the terminal device performs early timing advance in the target cell may be indicated in one of the following ways: Only when the terminal device performs early timing advance in the target cell, the terminal device performs early timing advance in the target cell is indicated. Another way is that only when the terminal device does not perform early timing advance in the target cell, the terminal device does not perform early timing advance in the target cell is indicated. Yet another way is that both the terminal device performing early timing advance in the target cell and the terminal device not performing early timing advance in the target cell may be indicated. For other content in this specification that indicates "whether," refer to the explanation herein. For example, "whether a neighboring cell belongs to one or more candidate cells."

In addition, it should also be noted that, in this application, a case in which "A or B" is indicated may be indicating A or B, or indicating A, or indicating whether it is A, or indicating B, or indicating whether it is B. For example, indicating an access type of a terminal device may be indicating RACH-less access or random access. It may also be indicating RACH-less access. It may also be indicating whether it is RACH-less access. It may also be indicating random access. It may also be indicating whether it is random access. "Not random access" may be understood as "RACH-less access."

S720: The terminal device sends an SHR to the network device. Correspondingly, the network device receives the SHR.

Optionally, the method may further include:
S730: The network device adjusts the mobility parameter based on the SHR.

Specifically, for how the network device adjusts the mobility parameter, refer to the description in S640. Details are not described again.

In this method, the SHR includes related information content in the LTM scenario, enabling the UE to record potential problem information in a scenario where the LTM handover succeeds. The network side can detect the occurrence of a non-optimal LTM handover event, and perform optimization of related mobility parameters, thereby reducing the interruption delay of the handover and reducing the probability of handover failure.

It should be understood that the methods proposed in the foregoing two embodiments may be used as independent solutions, or may be combined with each other. For example, the network device configures, for the terminal device, a condition for triggering the SHR. When the condition for triggering the SHR is met, the terminal device records the SHR. The SHR includes at least one of the information in S710.

To clearly understand the solutions of this application, the following uses an example in which a gNB-CU is used as the network device, and an example in which a UE is used as the terminal device, to provide an example of a procedure applicable to the foregoing technical solutions.

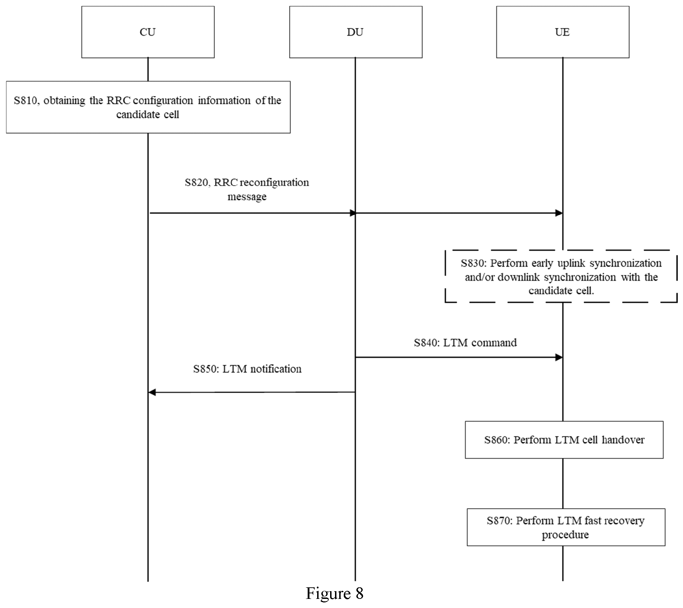

As shown in FIG. 8, the procedure includes the following steps:
S810. The CU obtains RRC configuration information of a candidate cell.

Optionally, the gNB-CU determines to initiate an LTM (L1/L2 Triggered Mobility)) procedure based on receiving, from the UE, a measurement report containing L3 measurement results.

It should be noted that the candidate cell may be a cell managed by the source CU, or may be a cell managed by another CU. In these two cases, the information receiving and sending of the CU are different. Specifically,

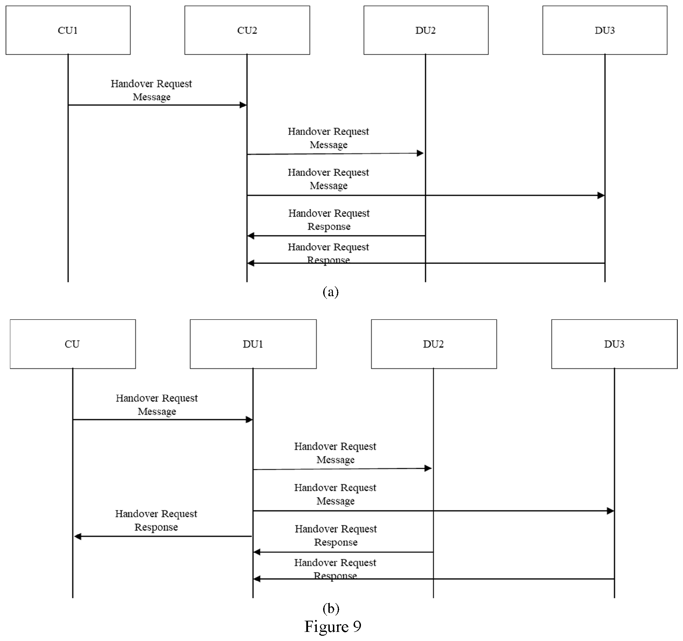

If it is an inter-CU (inter-CU) case, that is, the candidate cell is a cell managed by another CU, as shown in (a) in Figure 9, the source CU (CU1) sends a handover request message to the candidate CU (CU2). In this message, the candidate cell is indicated. For example, the cell identifier of the candidate cell is carried. The candidate CU (CU2) indicates the candidate cell to the candidate DUs (for example, DU2 and DU3)) managed by the candidate CU. If the candidate DU accepts the request, the candidate DU sends a low-layer RRC configuration of the candidate cell to the candidate CU to which the candidate DU belongs. For example, the candidate DU sends a handover request response, in which the RRC configuration of the candidate cell is carried.

If it is not a case of inter-CU (Intra-CU), that is, the candidate cell is a cell managed by the CU, as shown in (b) in FIG. 9, the CU indicates the candidate cell to the managed candidate DUs (for example, DU1, DU2, and DU3). For example, the CU sends a handover request message, where the handover request message carries an identifier of the candidate cell. If the candidate DU accepts the request, the candidate DU sends low-layer RRC configuration information of the candidate target cell to the CU. For example, the candidate DU sends a handover request response, where the handover request response carries the RRC configuration of the candidate cell.

The candidate cell may be one or more of the candidate cells mentioned above.

S820: The CU sends an RRC reconfiguration message to the UE through the DU. Correspondingly, the UE receives the RRC reconfiguration message.

The RRC reconfiguration message includes L1/L2 mobility configuration information. The L1/L2 mobility configuration information may include configuration information of one or more candidate cells. The L1/L2 mobility configuration information may further include whether the candidate cell is configured with an RAR. The L1/L2 mobility configuration information further includes L1 measurement control information.

To reduce the data interruption time between the UE and the source cell caused by the CFRA (Contention-Free Random Access) of the UE with the target (candidate) cell, the LTM supports the UE in performing early uplink synchronization with the candidate cell. After the UE sends a preamble to the candidate cell, the UE receives an RAR (Random Access Response) from the source cell or does not receive an RAR. Whether the UE receives an RAR is configured by the network side. For example, the network device may indicate to the UE whether each of one or more candidate cells is configured with an RAR. If the candidate cell is not configured with an RAR, when the LTM command (i.e., an example of the first indication information)) indicates that the candidate cell is the target cell, the LTM command also indicates the TA value of the target cell.

Optionally, S830: The UE performs early uplink synchronization and/or downlink synchronization with the candidate cell.

For example, before the UE receives the LTM command, the serving DU of the UE may trigger the UE to perform early TA acquisition for the candidate cell. Specifically, the serving DU indicates, to the UE, the CFRA resource for contention-free random access by using a PDCCH instruction (order). For example, the CFRA resource includes an SSB beam, a PRACH resource, and/or a preamble identifier. The serving DU further indicates, to the UE, the ID of the candidate cell.

The UE sends a random access preamble to the candidate cell. The UE performs cell search to achieve early downlink synchronization with the candidate cell.

For example, the UE performs early uplink synchronization and/or downlink synchronization with the candidate cell DU2 and DU3.

S840: The DU sends an LTM command to the UE. Correspondingly, the UE receives the LTM command.

The LTM command includes identification information of the target cell. In one possible manner, the LTM command may be sent to the UE through a MAC CE. In another possible manner, the LTM command may be other information from L1/L2.

Optionally, before the DU sends the LTM command, the UE sends an L1 measurement result to the DU. The DU determines the target cell based on the L1 measurement result, and sends the LTM command to the UE, to indicate the target cell through the LTM command.

It should be understood that, in the embodiments of this application, the sequence in which the UE performs early uplink synchronization, early downlink synchronization, and reports an L1 measurement result is not limited.

Wherein, the LTM command may further include the TA value of the target cell. The LTM command may further include information about a beam used by the target cell for uplink/downlink data transmission.

The UE performs cell handover (cell switch) according to the LTM command. Specifically, the UE applies the configuration information of the target cell. If the UE obtains the TA value (an available TA value) of the target cell, the UE performs RACH-less access (RACH-less) to access the target cell. Otherwise, the UE initiates random access to the target cell.

The method by which the UE obtains the TA value of the target cell is as follows:
Method 1: If the target cell is configured with an RAR, the UE receives, through the RAR, the TA value of the target cell before the LTM command. For example, the RAR may be sent by the current DU to the UE, or may be sent by the target cell to the UE. This is not limited.
Method 2: If the target cell is not configured with an RAR, the TA value of the target cell is indicated in the LTM command.

When the UE does not obtain the TA value of the target cell, or in other words, the UE does not obtain the TA value available for the target cell, the UE records the first report (for example, SHR). The first report may include at least one of the following: whether the UE performs early timing advance in the target cell, the number of times the UE receives a PDCCH instruction indicating the target cell, the identifier information of the attempted beam, the number of times the preamble is sent through the attempted beam, the PRACH resource information, the information corresponding to the candidate cell that instructs the UE to perform early timing advance, or the information of the target cell.

S850: The DU sends an LTM notification to the CU. Correspondingly, the CU receives the LTM notification.

The LTM notification is used to notify the CU of the initiation of the LTM command. Optionally, the LTM notification further includes identification information of the candidate cell.

S860: The UE performs an LTM cell switch (cell switch).

The UE switches the cell to the target cell. For example, the UE performs the cell switch in a manner that does not require random access or is based on random access. In other words, the type of cell switch includes a manner that does not require random access or is based on random access. For example, the UE switches the cell DU1 to DU2.

In a possible implementation, the UE may detect the cell handover status based on the first timer (also referred to as an LTM supervisory timer) described above. The cell handover status includes a successful cell handover or a failed cell handover.

When the first timer expires, the UE may record the first report (for example, an SHR). The first report may include the running duration of the first timer.

Optionally, S870: The UE performs an LTM fast recovery procedure.

If the cell handover of the UE in S860 fails, or if the UE quickly experiences a radio link failure (RLF) in the target cell, the UE may access a candidate cell through the LTM fast recovery procedure.

In one possible manner, the UE performs cell selection, and the selected cell is a candidate cell for LTM. The UE applies the configuration information of the candidate cell that is saved, to access the candidate cell in a random access or a RACH-less access manner (the same as the cell handover process described above).

Another possible manner is as follows: if the cell selected by the UE is not a candidate cell, or in other words, if the cell selected by the UE is not included in the candidate cell configured by the network side, the UE initiates an RRC reestablishment procedure.

It should be understood that if the UE successfully executes the LTM fast recovery procedure, that is, if the UE successfully accesses the candidate cell through the LTM fast recovery procedure, this may also be considered as a scenario in which the LTM cell handover is successful.

In one possible manner, the UE performs the LTM fast recovery procedure, and may record the first report (for example, the SHR). The first report may include information about one or more candidate cells used for fast recovery, and/or a time period from when the UE experiences a handover failure to when the UE successfully accesses a candidate cell.

Specifically, regarding the triggering of the first report and/or the content included in the first report, refer to the descriptions above, and no further elaboration will be provided.

In the implementation process, when the triggering condition is met, the network side controls the first report in the LTM scenario, for example, the recording and collection of the SHR. The SHR covers relevant information in the LTM process. The terminal device records the SHR and feeds back the information to the network device. Based on the SHR, the network device can optimize mobility parameters, thereby reducing the interruption delay during handovers and reducing the probability of handover failures.

It can be understood that some optional features in the embodiments of this application may, in certain scenarios, not depend on other features. Alternatively, in certain scenarios, these optional features may be combined with other features. This is not limited.

It can also be understood that the solutions in the various embodiments of this application may be reasonably combined and used. Moreover, the explanations or descriptions of the terms appearing in the embodiments may be mutually referenced or explained in the various embodiments. This is not limited.

It can also be understood that, in the method embodiments described above, the methods and operations implemented by the communications device may also be implemented by a component (for example, a chip or a circuit) of the communications device.

Corresponding to the methods provided in the method embodiments described above, embodiments of this application further provide corresponding apparatuses. The apparatus includes a module configured to perform the corresponding method in the method embodiments described above. The module may be software, hardware, or a combination of software and hardware. It can be understood that the technical features described in the method embodiments described above are also applicable to the following apparatus embodiments.

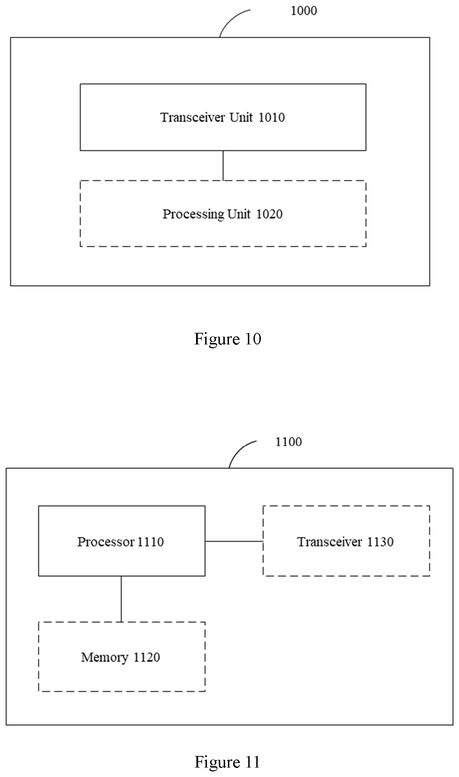

FIG. 10 is a schematic block diagram of a communications apparatus 1000 according to an embodiment of this application. The apparatus 1000 includes a transceiver unit 1010. The transceiver unit 1010 may be configured to implement a corresponding communication function. The transceiver unit 1010 may also be referred to as a communications interface or a communications unit.

Optionally, the apparatus 1000 further includes a processing unit 1020. The processing unit 1020 may be configured to perform information processing.

Optionally, the apparatus 1000 further includes a storage unit. The storage unit may be configured to store instructions and/or data. The processing unit 1020 may read the instructions and/or data in the storage unit, so that the apparatus implements the actions of the communication apparatus in the foregoing method embodiments.

In one design, the apparatus 1000 may be the terminal device in the foregoing embodiments, or may be a component (for example, a chip) of the terminal device. The apparatus 1000 may implement steps or processes performed by the terminal device in the foregoing method embodiments. The transceiver unit 1010 may be configured to perform a receiving and sending-related operation of the terminal device in the foregoing method embodiments. The processing unit 1020 may be configured to perform a processing-related operation of the terminal device in the foregoing method embodiments.

In a possible implementation, the transceiver unit 1010 is configured to receive first indication information; and may further be configured to send a first report.

In another possible implementation, the processing unit 1020 is configured to switch a cell, and may further be configured to record the first report.

The apparatus 1000 may implement steps or processes performed by a network device corresponding to the method embodiments according to the embodiments of this application. The apparatus 1000 may include a unit configured to perform the method performed by the network device in the embodiments shown in FIG. 6 to FIG. 9.

In another design, the apparatus 1000 may be the network device in the foregoing embodiments, or may be a component (for example, a chip) of the network device. The apparatus 1000 may implement steps or processes performed by a network device corresponding to the method embodiments according to the embodiments of this application. The apparatus 1000 may include a unit configured to perform the method performed by the network device in the embodiments shown in FIG. 6 to FIG. 9.

A possible implementation is as follows: The processing unit 1020 is configured to process and send the first indication information.

Another possible implementation is as follows: The transceiver unit 1010 is configured to receive the first report.

An implementation of the apparatus 1000 may implement steps or processes performed by a network device corresponding to the method embodiments according to the embodiments of this application. The apparatus 1000 may include a unit configured to perform the method performed by the network device in the embodiments shown in FIG. 6 to FIG. 9.

For a more detailed description of the apparatus 1000, refer to the corresponding descriptions in the method embodiments above, which can be directly obtained. For brevity, it will not be further described herein.

It should be understood that the specific process in which each unit performs the corresponding steps described above has been described in detail in the method embodiments above. For brevity, it will not be further described herein.

It should also be understood that the apparatus 1000 here is embodied in the form of functional units. The term "unit" here may refer to an application-specific integrated circuit (application specific integrated circuit, ASIC)), an electronic circuit, a processor (for example, a shared processor, a dedicated processor, or a group processor) and a memory, a merged logic circuit, and/or other appropriate components that support the described functions. In an optional example, a person skilled in the art may understand that the apparatus 1000 may be specifically the communication apparatus (for example, a terminal device, or a network device) in the foregoing embodiments) in the foregoing embodiments, and may be configured to perform the various processes and/or steps corresponding to the communication apparatus in the foregoing method embodiments. To avoid repetition, details are not described herein again.

The apparatus 1000 of each of the foregoing solutions has a function of implementing corresponding steps performed by a communications apparatus (for example, a terminal device or a network device) in the foregoing methods. This function may be implemented by hardware, or may be implemented by hardware executing corresponding software. The hardware or software includes one or more modules corresponding to the foregoing function. For example, the transceiver unit may be replaced by a transceiver (for example, the sending unit in the transceiver unit may be replaced by a transmitter, and the receiving unit in the transceiver unit may be replaced by a receiver). Other units, such as a processing unit, may be replaced by a processor, to separately perform the receiving and sending operations and related processing operations in each method embodiment.

In addition, the transceiver unit 1010 may further be a transceiver circuit (for example, may include a receiving circuit and a sending circuit). The processing unit may be a processing circuit.

It should be noted that the apparatus in FIG. 10 may be the device in the foregoing embodiments, or may be a chip or a chip system, for example, a system on chip (system on chip, SoC). The transceiver unit may be an input/output circuit or a communications interface. The processing unit is a processor, a microprocessor, or an integrated circuit integrated on the chip. This is not limited herein.

FIG. 11 is a schematic block diagram of a communications apparatus 1100 according to an embodiment of this application. The apparatus 1100 includes a processor 1110, and the processor 1110 is coupled to a memory 1120. Optionally, the apparatus 1100 further includes the memory 1120, configured to store a computer program or instructions and/or data. The processor 1110 is configured to execute the computer program or instructions stored in the memory 1120, or read the data stored in the memory 1120, to perform the methods in the foregoing method embodiments.

Optionally, the processor 1110 is one or more processors.

Optionally, the memory 1120 is one or more memories.

Optionally, the memory 1120 and the processor 1110 are integrated together, or are disposed separately.

Optionally, as shown in FIG. 11, the apparatus 1100 further includes a transceiver 1130. The transceiver 1130 is configured to receive and/or send a signal. For example, the processor 1110 is configured to control the transceiver 1130 to receive and/or send a signal.

As a solution, the apparatus 1100 is configured to implement the operations performed by the communications apparatus in the method embodiments described above.

For example, the processor 1110 is configured to execute the computer program or instructions stored in the memory 1120, to implement the related operations of the terminal device or the network device in the method embodiments described above.

In the implementation process, the steps of the foregoing method may be completed by using an integrated logic circuit of hardware in the processor 1110 or by using instructions in a form of software. The method disclosed in the embodiments of this application may be directly reflected as being executed by a hardware processor, or may be executed by a combination of hardware and software modules in the processor. The software module may be located in a random access memory, a flash memory, a read-only memory, a programmable read-only memory, an electrically erasable programmable memory, a register, or another mature storage medium in the art. The storage medium is located in the memory 1120, and the processor 1110 reads information in the memory 1120, and completes the steps of the foregoing method in combination with its hardware. To avoid repetition, details are not described herein again.

It should be understood that, in this embodiment of this application, the processor may be one or more integrated circuits, and is configured to execute a related program, to perform the method embodiments of this application.

A processor (e.g., processor 1110) may include one or more processors and be implemented as a combination of computing devices. The processor may separately include one or more of the following: a microprocessor, a microcontroller, a digital signal processor (digital signal processor, DSP), a digital signal processing device (digital signal processing device, DSPD), and an application specific integrated circuit (application specific integrated circuit), ASIC), field programmable gate array (FPGA), programmable logic device (programmable logic device, PLD), gate logic, transistor logic, discrete hardware circuitry, processing circuitry, or other suitable hardware, firmware, and/or a combination of hardware and software, configured to perform the various functions described in the disclosure. The processor may be a general-purpose processor or a dedicated processor. For example, the processor 1110 may be a baseband processor or a central processing unit. The baseband processor may be configured to process a communication protocol and communication data. The central processing unit may be configured to cause the apparatus to execute a software program and process data in the software program. In addition, a part of the processor may further include a nonvolatile random access memory. For example, the processor may further store information about a device type.

The programs in this application are used to represent software in a broad sense. Non-limiting examples of software include program code, programs, subroutines, instructions, instruction sets, code, code segments, software modules, application programs, or software applications, etc. The program may run in a processor and/or a computer. so that the apparatus performs various functions and/or processes described in this application.

The memory (e.g., memory 1120) may store data required by a processor (e.g., processor 1110) when executing software. The memory may be implemented using any suitable storage technology. For example, the memory may be any available storage medium that can be accessed by the processor and/or the computer. Non-limiting examples of storage media include random access memory (RAM), read-only memory (ROM), electrically erasable programmable read-only memory (EPROM, EEPROM), compact disc-rom (CD-ROM), static random access memory (static RAM, SRAM), dynamic random access memory (DRAM), synchronous dynamic random access memory (DRAM, SDRAM), double data rate synchronous dynamic random access memory (DDR SDRAM), enhanced synchronous dynamic random access memory (ESDRAM), synchronously connected dynamic random access memory (synchlink DRAM, SLDRAM) and direct rambus random access memory (DR RAM), removable media, optical disk storage, magnetic storage, flash memory, registers, status storage, remote mount storage, local or remote storage components, or any other medium capable of carrying or storing software, data, or information and accessible by the processor/computer. It should be noted that the memories described herein are intended to include, but are not limited to, these and any other suitable type of memories.

The memory (for example, memory 1120) and the processor (for example, processor 1110) may be disposed separately or integrated together. The memory may be configured to connect to the processor, so that the processor can read information from the memory, and store and/or write information in the memory. The memory may be integrated into the processor. The memory and the processor may be disposed in an integrated circuit (for example, the integrated circuit may be disposed in UE or another network node)).

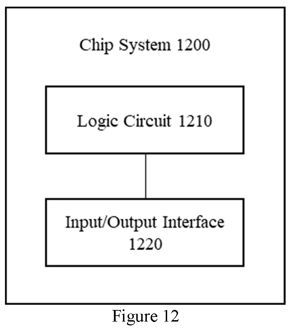

FIG. 12 is a schematic block diagram of a chip system 1200 according to an embodiment of this application. The chip system 1200 (or may also be referred to as a processing system) includes a logic circuit 1210 and an input/output interface (input/output interface) 1220.

Wherein, the logic circuit 1210 may be a processing circuit in the chip system 1200. The logic circuit 1210 may be coupled to a storage unit, and invoke an instruction in the storage unit, so that the chip system 1200 can implement the methods and functions in the embodiments of this application. The input/output interface 1220 may be an input/output circuit in the chip system 1200, and is configured to output information processed by the chip system 1200, or input data or signaling information to be processed into the chip system 1200 for processing.

As a solution, the chip system 1200 is configured to implement the operations performed by the communications apparatus in the method embodiments described above.

For example, the logic circuit 1210 is configured to implement processing-related operations performed by the terminal device in the method embodiments described above. For example, the processing-related operations performed by the terminal device in the embodiment shown in FIG. 3. The input/output interface 1220 is configured to implement sending and/or receiving-related operations performed by the terminal device in the method embodiments described above. For example, the sending and/or receiving-related operations performed by the terminal device in the embodiment shown in FIG. 3.

For another example, the logic circuit 1210 is configured to implement processing-related operations performed by the network device in the method embodiments described above. For example, the processing-related operations performed by the network device in the embodiment shown in FIG. 3. The input/output interface 1220 is configured to implement sending and/or receiving-related operations performed by the network device in the method embodiments described above. For example, the sending and/or receiving-related operations performed by the network device in the embodiment shown in FIG. 3.

An embodiment of this application further provides a computer readable storage medium, where the computer readable storage medium stores a computer instruction used to implement the method performed by a communications apparatus (such as a terminal device or a network device) in the foregoing method embodiments.

An embodiment of this application further provides a computer program product, including an instruction. When the instruction is executed by a computer, the computer is used to implement the method performed by the communications apparatus (such as a terminal device or a network device) in the foregoing method embodiments.

An embodiment of this application further provides a communications system. The communications system includes the terminal device and the network device in the foregoing embodiments.

For explanations and beneficial effects of related content in any apparatus provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, the unit division is merely logical function division, and may be other division in actual implementation. For example, a plurality of units or components may be combined or integrated into another system, or some features may be ignored. Or not perform. In addition, the displayed or discussed mutual couplings or direct couplings or communication connections may be implemented by using some interfaces, and the indirect couplings or communication connections of the apparatuses or units may be implemented in electrical, mechanical, or other forms.

The units described above as separate components may or may not be physically separate units. The components displayed as units may or may not be physically separate units, that is, they may be located in one place, or they may be distributed over multiple network units. Some or all of the units can be selected according to actual needs to implement the solutions provided in this application.

Additionally, in the various embodiments of this application, the functional units may be integrated into one unit, or each unit may exist physically as separate units. Alternatively, two or more units may be integrated into one unit.

A person of ordinary skill in the art may be aware that, in combination with the examples described in embodiments disclosed in this specification, the units and algorithm steps of the examples can be implemented by electronic hardware or a combination of computer software and electronic hardware. Whether these functions are performed by hardware or software depends on particular applications and design constraints of the technical solutions. Professional technicians may use different methods to implement the described functions for each particular application, but such implementation should not be considered as going beyond the scope of this application.

When implemented using software, it can be fully or partially implemented in the form of a computer program product. The computer program product includes one or more computer instructions. When the computer program instructions are loaded and executed on a computer, all or part of the processes or functions described in the embodiments of this application are generated. The computer may be a general-purpose computer, a dedicated computer, a computer network, or another programmable apparatus. For example, the computer may be a personal computer, a server, or a network device. The computer instructions may be stored in a computer-readable storage medium, or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL))) or wireless (for example, infrared, radio, or microwave) manner. For the computer-readable storage medium, refer to the descriptions above.

The above description is merely a specific implementation of this application. However, the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a terminal device, first indication information sent via a media access control control element, wherein the first indication information indicates the terminal device to switch to a target cell, the target cell is one of one or more candidate cells, and the configuration information of the one or more candidate cells is pre-received by the terminal device;
recording, by the terminal device, a first report, wherein the first report is used to indicate information in a process of performing layer 1/layer 2 mobility by the terminal device;
sending, by the terminal device, the first report.

2. The method according to claim 1, wherein the method further comprises:
receiving, by the terminal device, first information, wherein the first information indicates that the terminal device records the first report in a mobility process at layer 1 or layer 2 and when a trigger condition is met, wherein the first information includes the trigger condition.

3. The method according to claim 2, wherein the trigger condition is related to at least one of the target cell, the running duration of the first timer, the running duration of the second timer, the running duration of the third timer, the running duration of the fourth timer, the running duration of the fifth timer, or fast recovery,
the running duration of the first timer is duration from when the terminal device receives the first indication information to when the terminal device completes random access or sends the first uplink data,
running duration of the second timer is duration from the time when the terminal device detects a physical layer out-of-synchronization problem with the source network device to the time when the terminal device receives the first indication information; and,
running duration of the third timer is duration in which the terminal device triggers, in the running period of the second timer, a measurement report to the terminal device to receive the first indication information, and,
running duration of the fourth timer is duration from the time when the terminal device receives the first indication information to the time when the terminal device transmits the first piece of uplink data or receives the first piece of downlink data; and,
running duration of the fifth timer is duration from the time when the terminal receives or applies a radio resource control RRC reconfiguration message with a synchronization function to the time when the terminal device completes random access or receives a downlink physical control channel transmission after the terminal device performs uplink transmission for the first time in a case of RACH-less access.

4. The method according to claim 3, wherein the trigger condition is related to the target cell, and the trigger condition is:
the terminal device has not obtained an available early timing value of the target cell, The early timing value is used by the terminal device to obtain uplink synchronization with the target cell to avoid random access.

5. The method according to claim 4, wherein the terminal device has not obtained the early timing value of the target cell, comprising:
the terminal device has not performed early timing acquisition with the target cell, or
The terminal device has performed early timing acquisition with the target cell, but has not obtained an available early timing value.

6. The method according to claim 3, wherein the trigger condition is related to the running duration of the first timer, and the trigger condition is:
the running duration of the first timer is less than the first threshold, and is greater than or equal to the second threshold,
wherein, the second threshold is the product of the first threshold and a first coefficient, wherein the first coefficient is a positive number less than 1; or, the second threshold is a value less than the first threshold.

7. The method according to claim 3, wherein the trigger condition is related to the running duration of the second timer, and the trigger condition is:
the running duration of the second timer is less than the third threshold, and is greater than or equal to the fourth threshold,
wherein, the fourth threshold is the product of the third threshold and a second coefficient, wherein the second coefficient is a positive number less than 1, or the fourth threshold is a value less than the third threshold.

8. The method according to claim 3, wherein the trigger condition is related to the running duration of the third timer, and the trigger condition is:
the running duration of the third timer is less than a fifth threshold value, and is greater than or equal to a sixth threshold value,
wherein, the sixth threshold value is the product of the fifth threshold value and a third coefficient, the third coefficient is a positive number less than 1, or the sixth threshold value is a value less than the fifth threshold value.

9. The method according to claim 3, wherein the trigger condition is related to the running duration of the fourth timer, and the trigger condition is:
the running duration of the fourth timer is greater than or equal to a seventh threshold value.

10. The method according to claim 3, wherein the trigger condition is related to the running duration of the fifth timer, and the trigger condition is:
the running duration of the fifth timer is less than an eighth threshold value, and is greater than or equal to a ninth threshold value,
wherein, the ninth threshold value is the product of the eighth threshold value and a fourth coefficient, The fourth coefficient is a positive number less than 1, or the ninth threshold value is a value less than the eighth threshold value.

11. The method according to claim 3, wherein the trigger condition is related to fast recovery, and the trigger condition is:
the terminal device performs fast recovery based on the one or more candidate cells, in order to access one of the candidate cells.

12. The method according to any one of claims 1 to 11, wherein the first report comprises one or more of the following information:
one or more of the trigger conditions for the first report that are met;
early timing advance information;
CELL INFORMATION;
TARGET cell access information;
Fast restore process information.

13. The method according to claim 12, wherein the first report comprises early timing advance information, and the early timing advance information comprises at least one of the following: whether the terminal device performs early timing advance in the target cell, a quantity of times the terminal device receives a downlink control channel PDCCH instruction indicating the target cell, the beam identifier information for the attempt to perform early timing advance, a quantity of times a preamble is sent through the attempted beam, physical random access channel PRACH resource information, or information corresponding to a candidate cell in which the terminal device is instructed to perform early timing advance, or the information of the target cell.

14. The method according to claim 12, wherein the first report comprises fast recovery process information, and the fast recovery process information comprises information about one or more candidate cells used for fast recovery, and/or the duration from when the terminal device experiences a handover failure to when it successfully accesses one of the one or more candidate cells.

15. The method according to claim 12, wherein the first report further comprises time information, and the time information comprises at least one of the following: a running duration of the fourth timer, duration from when the terminal device receives the configuration information of the one or more candidate cells, or receives the first PDCCH instruction, or receives the last PDCCH instruction, to when the terminal device receives the first indication information, or running duration of the first timer.

16. The method according to claim 12, wherein the first report further comprises cell information, and the cell information comprises information about at least one of the following: a current serving cell of the terminal device, a target cell of the terminal device, or a neighboring cell, The cell information includes at least one of the following: cell identification information, a layer 1 and/or layer 3 measurement result corresponding to the cell, whether the neighboring cell belongs to the one or more candidate cells, wherein the neighboring cell is another cell, other than the current serving cell, that is measured by the terminal device, The one or more candidate cells are cells that the terminal device is allowed to access when a handover fails.

17. The method according to claim 12, wherein the first report further comprises access information of the target cell, the access information of the target cell comprises information about an access type used by the terminal device to access the target cell, and the access type is RACH-less access.

18. The method according to claim 17, wherein when the access type is random access, the access information of the target cell further comprises information about a two-step random access process and/or a four-step random access process.

19. A communication method, comprising:
sending, by a network device, first indication information, wherein the first indication information indicates the terminal device to switch to a target cell, and the first indication information is sent via a media access control control element, the target cell is one of one or more candidate cells, and information about the one or more candidate cells is information that the terminal device has received in advance;
receiving, by the network device, a first report, wherein the first report is used to indicate information in a process in which the terminal device performs mobility at layer 1/layer 2.

20. The method according to claim 19, wherein the method further comprises:
sending, by the network device, first information, wherein the first information indicates that the terminal device records the first report in a mobility process at layer 1 or layer 2 and when a trigger condition is met, The first information includes the trigger condition.

21. The method according to claim 19 or 20, wherein the trigger condition is related to at least one of the target cell, the running duration of the first timer, the running duration of the second timer, the running duration of the third timer, the running duration of the fourth timer, the running duration of the fifth timer, or fast recovery,
the running duration of the first timer is duration from when the terminal device receives the first indication information to when the terminal device completes random access or sends the first uplink data,
the running duration of the second timer is duration from when the terminal device detects that there is a physical layer out-of-synchronization problem with the source network device to when the terminal device receives the first indication information,
the running duration of the third timer is, during the running period of the second timer, the duration from when the terminal device triggers the sending of a measurement report to when the terminal device receives the first indication information,
the running duration of the fourth timer is the duration from when the terminal device receives the first indication information to when the terminal device transmits the first uplink data or receives the first downlink data,
the running duration of the fifth timer is the duration from when the terminal receives or applies a radio resource control (RRC) reconfiguration message with a synchronization function, to when the terminal device completes random access, or when the terminal device receives a downlink physical control channel transmission after the first uplink transmission in a RACH-less access scenario.

22. The method according to claim 21, wherein the trigger condition is related to the target cell, and the trigger condition is:
the terminal device does not have an available early timing value for the target cell, and the early timing value is used by the terminal device to obtain uplink synchronization with the target cell to avoid random access.

23. The method according to claim 21, wherein the trigger condition is related to the running duration of the first timer, and the trigger condition is:
the running duration of the first timer is less than a first threshold, and is greater than or equal to a second threshold,
wherein, the second threshold value is the product of the first threshold value and a first coefficient, wherein the first coefficient is a positive number less than 1; or, the second threshold value is a value less than the first threshold value.

24. The method according to claim 21, wherein the trigger condition is related to the running duration of the second timer, and the trigger condition is:
the running duration of the second timer is less than a third threshold, and is greater than or equal to a fourth threshold,
the fourth threshold is a product of the third threshold and a second coefficient, and the second coefficient is a positive number less than 1, or the fourth threshold is a value less than the third threshold.

25. The method according to claim 21, wherein the trigger condition is related to the running duration of the third timer, and the trigger condition is:
the running duration of the third timer is less than the fifth threshold value, and is greater than or equal to the sixth threshold value,
wherein the sixth threshold value is the product of the fifth threshold value and a third coefficient, the third coefficient is a positive number less than 1, or the sixth threshold value is a value less than the fifth threshold value.

26. The method according to claim 21, wherein the trigger condition is related to the running duration of the fourth timer, and the trigger condition is:
the running duration of the fourth timer is greater than or equal to the seventh threshold value.

27. The method according to claim 21, wherein the trigger condition is related to the running duration of the fifth timer, and the trigger condition is:
the running duration of the fifth timer is less than the eighth threshold value, and is greater than or equal to the ninth threshold value,
wherein, the ninth threshold value is the product of the eighth threshold value and the fourth coefficient, the fourth coefficient is a positive number less than 1, or the ninth threshold value is a value less than the eighth threshold value.

28. The method according to claim 21, wherein the trigger condition is related to the fast recovery, and the trigger condition is:
the terminal device performs fast recovery based on the one or more candidate cells, in order to access one of the candidate cells.

29. The method according to any one of claims 19 to 28, wherein the first report comprises one or more of the following information:
one or more of the trigger conditions for the first report that are met;
early timing advance information;
cell information;
access information of the target cell;
fast process recovery information.

30. The method according to claim 29, wherein the first report comprises early timing advance information, and the early timing advance information comprises at least one of the following: whether the terminal device performs early timing advance in the target cell, a quantity of times that the terminal device receives a PDCCH instruction indicating the target cell, identification information of a beam on which an attempt is made to perform early timing advance, a quantity of times that a preamble is sent on the attempted beam, PRACH resource information, or information corresponding to a candidate cell in which the terminal device performs early timing advance, or the information of the target cell.

31. The method according to claim 29, wherein the first report comprises fast recovery process information, and the fast recovery process information comprises information about one or more candidate cells used for fast recovery, and/or, duration from when the terminal device fails to be handed over to when the terminal device successfully accesses one of the one or more candidate cells.

32. The method according to claim 29, wherein the first report further comprises time information, and the time information comprises at least one of the following: the running duration of the fourth timer, the time from when the terminal device receives the preconfiguration of the candidate cell or receives the first PDCCH instruction or receives the last PDCCH instruction, to when the terminal device receives the first indication information), or the running duration of the first timer.

33. The method according to claim 29, wherein the first report further comprises cell information, and the cell information comprises information about at least one of the current serving cell of the terminal device, the target cell of the terminal device, or a neighboring cell, the cell information includes at least one of the following: cell identification information, a measurement result of layer 1 and/or layer 3 corresponding to the cell, whether the neighboring cell belongs to the one or more candidate cells, wherein the neighboring cell is a cell, other than the current serving cell, that is measured by the terminal device, the one or more candidate cells are cells that are allowed to be accessed by the terminal device when a handover failure occurs.

34. The method according to claim 29, wherein the first report further comprises access information of the target cell, the access information of the target cell comprises an access type used by the terminal device to access the target cell, and the access type is a RACH-less access type.

35. The method according to claim 34, wherein when the access type is a random access type, the access information of the target cell further comprises information about a two-step random access process and/or a four-step random access process.

36. A communications apparatus, comprising a module configured to perform the method according to any one of claims 1 to 18.

37. A communications apparatus, comprising a module configured to perform the method according to any one of claims 19 to 35.

38. A communications system, comprising the communications apparatus according to claim 34 and the communications apparatus according to claim 35.

39. A computer-readable storage medium, **characterized in that** the computer-readable storage medium stores a computer program or instructions, and when the computer program or instructions are run on a computer, the computer is enabled to perform the method according to any one of claims 1 to 35.

40. A computer program product, **characterized in that** the computer program product includes instructions for performing the method according to any one of claims 1 to 35.
